(19)

Europäisches Patentamt

European Patent Office

Office européen des brevets

(11) **EP 4 502 483 A1**

(12) **EUROPEAN PATENT APPLICATION**
published in accordance with Art. 153(4) EPC

(43) Date of publication:
**05.02.2025 Bulletin 2025/06**

(21) Application number: **22935242.2**

(22) Date of filing: **30.03.2022**

(51) International Patent Classification (IPC):
***F24F 11/64*** *(2018.01)*

(52) Cooperative Patent Classification (CPC):
F24F 2110/64

(86) International application number:
**PCT/JP2022/015944**

(87) International publication number:
**WO 2023/188096 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **UDAKA, Ryoma**
  **Tokyo 100-8310 (JP)**
• **MOTODANI,Mio**
  **Tokyo 100-8310 (JP)**
• **SAWADA, Masae**
  **Tokyo 100-8310 (JP)**

(74) Representative: **Meissner Bolte Partnerschaft
mbB
Patentanwälte Rechtsanwälte
Postfach 86 06 24
81633 München (DE)**

(54) **AIR CONDITIONING CONTROL DEVICE AND AIR CONDITIONING CONTROL METHOD**

(57)     The present invention provides a variable importance level table (138) that stores importance levels of variables showing environment of an air-conditioning target space for each control mode, a comfort level table (139) that stores comfort levels of the variables for the individual importance levels, factor calculation circuitry (44) configured to calculate weighting factors of the variables from comfort level functions that define relationships between values of the variables and the comfort levels, and the comfort levels that are associated with the importance levels of the variables associated with the control mode and are identified from the variable importance level table and the comfort level table, evaluation value calculation circuitry configured to calculate evaluation values from the calculated weighting factors and the variables associated with manipulation amounts, and operation state determination circuitry (42) configured to determine the manipulation amount in which the evaluation value is high as a manipulation amount of an air-conditioning apparatus.

FIG. 3

## Description

### Technical Field

The present invention relates to a technology for controlling an air conditioner.

### Background Art

To control an air conditioner in consideration of distribution of indoor environment, there is proposed an air-conditioning control device that controls an air conditioner by means of fluid analysis.

For example, in Patent Literature 1, control amounts such as an air temperature and an airflow direction of air conditioning are controlled and the temperature of an air-conditioning target space is adjusted. In this case, there are various demands to not only adjust the temperature but also achieve the target temperature with reduced power consumption or achieve the target temperature more quickly. Depending on which demand is to be met with priority, each control amount has a different value even when the same target temperature is set. To determine the control amounts to meet the various demands, Patent Literature 1 discloses that a specific pattern is determined among a plurality of patterns of control amounts by use of evaluation values.

More specifically, the following technology is disclosed. The control amounts in each combination are input to functions (models) such that target items such as an average airflow speed and a power consumption related to the user's demand are calculated. The obtained results are multiplied by weighting factors and added together such that a target item having a higher priority level is weighted more. Thus, an evaluation value is calculated. Through the control on the air conditioner with control amounts having higher evaluation values, an air-conditioning operation that meets the user's demand more satisfactorily is achieved.

### Citation List

### Patent Literature

Patent Literature 1: Japanese Unexamined Patent Application Publication JP 2016- 61 447 A

### Summary of the Invention

### Technical Problem

Patent Literature 1 discloses that the weighting factors are set such that a target item having a higher priority level is weighted more. However, Patent Literature 1 does not disclose a specific method for determining the weighting factors, and does not even disclose automatic determination of the weighting factors. Regarding the weighting, there is no consideration or suggestion about the comfort of air conditioning. The present invention has an object to automatically adjust the weighting factors to control the air conditioning such that the demand is met while the comfort is kept at a higher level.

### Solution to the Problem

An air-conditioning control device according to an Embodiment of the present invention includes a variable importance level table that stores importance levels of variables showing environment of an air-conditioning target space for each control mode, a comfort level table that stores comfort levels of the variables for the individual importance levels, factor calculation circuitry configured to calculate weighting factors of the variables from comfort level functions that define relationships between values of the variables and the comfort levels, and the comfort levels that are associated with the importance levels of the variables associated with the control mode and are identified from the variable importance level table and the comfort level table, evaluation value calculation circuitry configured to calculate evaluation values from the calculated weighting factors and the variables associated with manipulation amounts, and operation state determination circuitry configured to determine the manipulation amount in which the evaluation value is high as a manipulation amount of an air-conditioning apparatus.

### Advantageous Effects of Invention

According to an Embodiment of the present invention, the air conditioning can be controlled such that the demand is met while the comfort is kept at a higher level.

EP 4 502 483 A1

Brief Description of the Drawings

FIG. 1 is a configuration diagram illustrating an example of an air-conditioning system including an air-conditioning control device according to Embodiment 1.
FIG. 2 is a refrigerant circuit diagram illustrating a configuration example of an air conditioner illustrated in FIG. 1.
FIG. 3 is a block diagram illustrating a configuration example of the air-conditioning control device according to Embodiment 1.
FIG. 4 is a diagram illustrating an example of an analysis condition list.
FIG. 5 is a diagram illustrating an example of outlet conditions related to an operation state of the air conditioner among analysis conditions.
FIG. 6 is a diagram illustrating an example of load conditions among the analysis conditions.
FIG. 7 is a diagram illustrating an example of a priority level management table in which priority levels are managed by numerical ranges.
FIG. 8 is a diagram illustrating an example of pattern data.
FIG. 9 is a diagram illustrating an example of a control mode list.
FIG. 10 is a diagram illustrating an example of a variable importance level table.
FIG. 11 is a diagram illustrating an example in which variables in the variable importance level table are different.
FIG. 12 is a diagram illustrating an example of a cooling comfort level table associated with control modes and variables in the variable importance level table illustrated in FIG. 10.
FIG. 13 is a diagram illustrating an example of a heating comfort level table.
FIG. 14 is a diagram illustrating an example of a cooling comfort level table associated with the variable importance level table illustrated in FIG. 11.
FIG. 15 is a diagram illustrating an example of a comfort level function for "airflow speed at 1.1 m above floor" during cooling.
FIG. 16 is a diagram illustrating an example of a comfort level function for "temperature at 1.1 m above floor" during cooling.
FIG. 17 is a diagram illustrating an example of a comfort level function for "difference between temperatures at +1.7 m above floor and +0.1 m above floor" during cooling.
FIG. 18 is a diagram illustrating an example of a variable importance level table for use in description of a method for determining weighting factors by factor calculation circuitry.
FIG. 19 is a diagram illustrating an example of a comfort level table for use in the description of the method for determining the weighting factors by the factor calculation circuitry.
FIG. 20 is a diagram illustrating a comfort level function for "airflow speed at +1.1 m above floor" during cooling.
FIG. 21 is a diagram illustrating a comfort level function for "temperature at +1.1 m above floor" during cooling.
FIG. 22 is a diagram illustrating a comfort level function for "difference between temperatures at +1.7 m above floor and +0.1 m above floor" during cooling.
FIG. 23 is a diagram illustrating another example of the comfort level function illustrated in FIG. 3.
FIG. 24 is a hardware configuration diagram illustrating a configuration example of an arithmetic device illustrated in FIG. 3.
FIG. 25 is a hardware configuration diagram illustrating another configuration example of the arithmetic device illustrated in FIG. 3.
FIG. 26 is a flowchart illustrating an example of an operation procedure of the air-conditioning control device according to Embodiment 1.
FIG. 27 is a flowchart of an operation procedure in Step ST11 illustrated in FIG. 26.
FIG. 28 is a flowchart of an operation procedure in Step ST15 illustrated in FIG. 26.
FIG. 29 is a flowchart of an operation procedure in Step ST23 illustrated in FIG. 28.
FIG. 30 is a configuration diagram illustrating an example of an air-conditioning system including an air-conditioning control device according to Embodiment 2.
FIG. 31 is a functional configuration diagram of a ventilation device illustrated in FIG. 30.
FIG. 32 is a diagram illustrating an example of the structure of a total enthalpy heat exchanger of the ventilation device illustrated in FIG. 30.
FIG. 33 is a block diagram illustrating a configuration example of the air-conditioning control device according to Embodiment 2.
FIG. 34 is a diagram illustrating an example of outlet conditions related to operation states of an air conditioner and the ventilation device among analysis conditions.
FIG. 35 is a diagram illustrating an example of pattern data illustrated in FIG. 33.

FIG. 36 is a diagram illustrating an example of a comfort level function illustrated in FIG. 33.

FIG. 37 is a flowchart of an operation procedure in Step ST15 illustrated in FIG. 26 in Embodiment 2.

FIG. 38 is a block diagram illustrating a configuration example of an air-conditioning control device according to Embodiment 3.

FIG. 39 is a diagram illustrating an example of a change history table illustrated in FIG. 38.

FIG. 40 is a diagram illustrating an example of a comfort level function improved by function improvement circuitry illustrated in FIG. 38.

FIG. 41 is a flowchart illustrating an example of an operation procedure of the function improvement circuitry in Embodiment 3.

Description of Embodiments

Embodiment 1.

Embodiments of an air-conditioning control device 1 of the present invention are described with reference to the drawings.

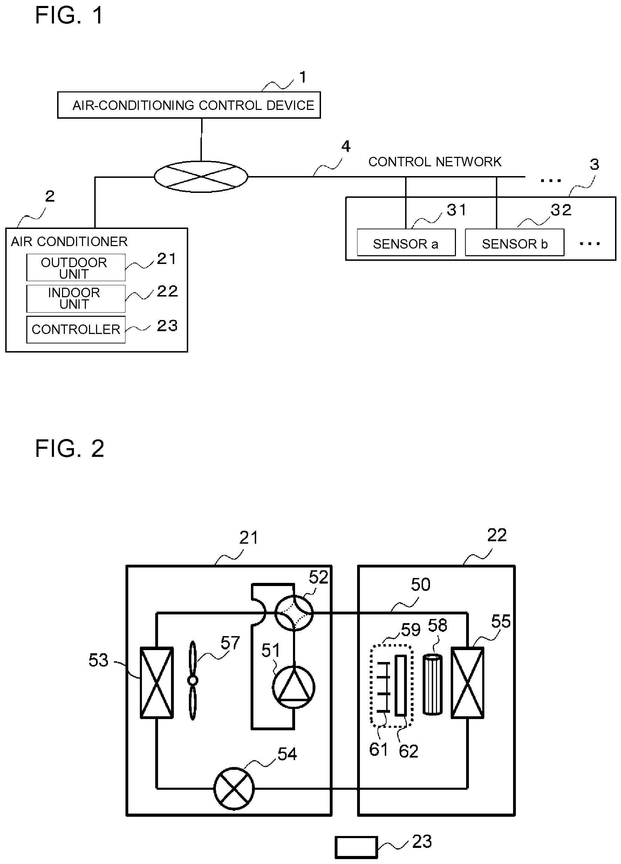

FIG. 1 is a configuration diagram illustrating an example of an air-conditioning system including the air-conditioning control device 1 according to Embodiment 1. The air-conditioning system includes an air conditioner 2 that conditions air in an air-conditioning target space, the air-conditioning control device 1 that controls the air conditioner 2, and sensors 3 that measure at least the environment of the air-conditioning target space. The air-conditioning control device 1 is connected to the air conditioner 2 and the sensors 3 via a network 4. The sensors 3 include a sensor 31, a sensor 32, etc. In Embodiment 1, the air conditioner 2 and the sensors 3 are connected in respective ways, but the sensors 3 may be provided in the air conditioner 2 and their locations are not limited. As illustrated in FIG. 1, the air conditioner 2 includes an outdoor unit 21, an indoor unit 22, and a controller 23. The indoor unit 22 is installed in a room that is the air-conditioning target space.

FIG. 2 is a refrigerant circuit diagram illustrating a configuration example of the air conditioner 2 illustrated in FIG. 1. As illustrated in FIG. 2, the outdoor unit 21 is connected to the indoor unit 22 via refrigerant pipes. The outdoor unit 21 includes a compressor 51, a four-way valve 52, a heat source-side heat exchanger 53, an expansion device 54, and an outdoor fan 57. The indoor unit 22 includes a load-side heat exchanger 55, an indoor fan 58, and an airflow direction adjustment unit 59.

The compressor 51, the heat source-side heat exchanger 53, the expansion device 54, and the load-side heat exchanger 55 are connected by refrigerant pipes to form a refrigerant circuit 50 in which refrigerant circulates. Embodiment 1 illustrates a case where the refrigerant is a heat medium that circulates between the outdoor unit 21 and the indoor unit 22, but a configuration may be employed that a heat-medium heat exchanger (not illustrated) that exchanges heat between water and refrigerant is provided in the outdoor unit 21 and water circulates between the outdoor unit 21 and the indoor unit 22.

The airflow direction adjustment unit 59 is provided at an air outlet of the indoor unit 22. The airflow direction adjustment unit 59 includes a lateral flap 61 and a vertical flap 62. The lateral flap 61 changes the direction of airflow sent from the indoor unit 22 parallel to the floor by changing the angle clockwise or counterclockwise to the forward direction from the air outlet of the indoor unit 22. The direction of airflow that changes from the angle of the lateral flap 61 is a lateral airflow direction. In the following description, the angle of the lateral airflow direction has a positive value as a clockwise angle and a negative value as a counterclockwise angle to the forward direction from the air outlet of the indoor unit 22 defined as a reference.

The vertical flap 62 changes the direction of airflow sent from the indoor unit 22 by changing the angle in a range from the gravity direction to the horizontal direction at the air outlet of the indoor unit 22 with the gravity direction defined as a reference. In this case, the horizontal direction is 90° when the gravity direction is 0°. The direction of airflow that changes from the angle of the vertical flap 62 is a vertical airflow direction. The method for representing the angle of the vertical airflow direction is not limited to the method in which the gravity direction is 0° and the horizontal direction is 90°. The gravity direction may be 90° and the horizontal direction may be 0°. When the horizontal direction is 0°, the angle of the vertical airflow direction corresponds to an angle of depression.

The controller 23 is, for example, a microcomputer. The controller 23 is connected to the compressor 51, the four-way valve 52, the outdoor fan 57, the expansion device 54, the indoor fan 58, and the airflow direction adjustment unit 59 via unillustrated signal lines. The controller 23 is a device to be used by a user or operator to switch on and off the indoor unit 22 or manually change settings of the temperature, the airflow volume, and other variables. The controller 23 may be a remote controller.

The controller 23 controls the refrigeration cycle of refrigerant that circulates through the refrigerant circuit 50. The controller 23 controls the four-way valve 52 to change the refrigerant flow direction in the refrigerant circuit 50 depending on heating and cooling operation modes. The controller 23 controls the operation frequency of the compressor 51, the opening degree of the expansion device 54, and the rotation frequency of the outdoor fan 57 such that the indoor temperature and humidity measured by the sensors 3 agree with set values within predetermined ranges. The set values of the indoor temperature and humidity are set by the user. The controller 23 transmits air-conditioning operation data 36 showing an operation state of the air conditioner 2 to the air-conditioning control device 1 via the network 4 at predetermined time intervals. The predetermined time interval is, for example, 5 minutes.

When a control command is received from the air-conditioning control device **1,** the controller 23 controls the rotation frequency of the indoor fan 58 and the angles of the lateral flap 61 and the vertical flap 62 of the airflow direction adjustment unit 59 in accordance with the control command. The airflow volume and the airflow speed are adjusted in conjunction with the rotation frequency of the indoor fan 58. The lateral airflow direction is adjusted in conjunction with the angle of the lateral flap 61. The vertical airflow direction is adjusted in conjunction with the angle of the vertical flap 62.

When the operation mode is the heating operation, the refrigerant receives heat at the heat source-side heat exchanger 53, and exchanges heat with indoor air and rejects heat at the load-side heat exchanger 55 to heat the indoor air. When the operation mode is the cooling operation, the refrigerant rejects heat at the heat source-side heat exchanger 53, and exchanges heat with indoor air at the load-side heat exchanger 55 to cool the indoor air.

Next, an example of application of the air conditioner 2 illustrated in FIG. 1 is described. **In** a residential air-conditioning system, one indoor unit 22 is often installed in one room. A room air conditioner is a typical example of the air conditioner 2. The air conditioner 2 may be a room air conditioner in which a plurality of indoor units 22 is connected to one outdoor unit.

The air conditioner 2 may be a variable refrigerant flow (VRF) system for use in an office building or other buildings. The air-conditioning system may be a central air-conditioning system for air conditioning in the entire large-scale building. The air-conditioning system may be an air-conditioning system that is installed in a server room or a storage room and conditions air for objects. These configurations are examples of the air conditioner 2 and the air-conditioning system including the air conditioner 2, and the type of the air conditioner 2 is not limited to the type described above. The air-conditioning target space is not limited to the rooms and buildings described above.

Next, the sensors 3 illustrated in FIG. 1 are described. The sensors 3 measure physical quantities. The sensors 3 transmit sensor data 37 that is measured values to the air-conditioning control device 1 via the network 4 at predetermined time intervals. The predetermined time interval is, for example, 5 minutes. The number of the sensors 3 may be one or plural.

FIG. 1 illustrates a case where the sensors 3 are a plurality of sensors 31 to 3n (wherein n is an integer equal to or larger than 2). The sensors 3 acquire information on indoor and outdoor environments. The sensors 3 measure a temperature, a humidity, a radiation temperature, thermal imagery, an airflow speed, and other variables. When the sensors 3 include an infrared sensor, the thermal imagery is acquired by the infrared sensor.

In the configuration example illustrated in FIG. 1, the sensors 3 are provided independently of the air conditioner 2, but may be provided in the air conditioner 2. For example, a sensor 3 that measures a room temperature that is a temperature of indoor air may be provided in the indoor unit 22 and a sensor 3 that measures an outside air temperature that is a temperature of outdoor air may be provided in the outdoor unit 21. The outside air temperature need not necessarily be transmitted from the sensor 3 to the air-conditioning control device 1. A server (not illustrated) that provides weather forecast via a network such as the Internet may transmit outside air temperature information to the air-conditioning control device 1.

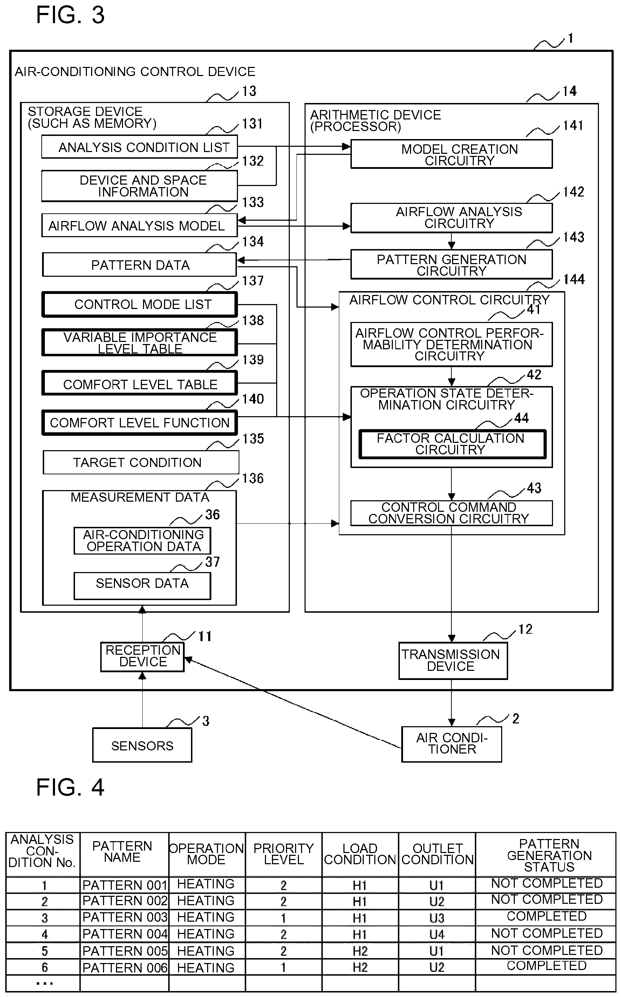

The network 4 is a communication network connecting the air-conditioning control device 1, the air conditioner 2, and the sensors 3. The communication means via the network 4 may be wired or wireless communication, or may be a combination of wired communication and wireless communication. The communication protocol for communication via the network 4 is not particularly limited, and may be a general-purpose protocol open to the public. The communication range of the network 4 may be a narrow range as in the case of a local area network (LAN), or may be a wide range as in the case of the Internet. When the network 4 is a dedicated network used by a manufacturer of the air conditioner 2, the communication protocol for use in the network 4 may be a dedicated protocol. Next, the configuration of the air-conditioning control device 1 is described with reference to FIGS. 1 and 3.

FIG. 3 is a block diagram illustrating a configuration example of the air-conditioning control device 1 according to Embodiment 1. The air-conditioning control device 1 is an information processing device that controls the air conditioner 2. The air-conditioning control device 1 includes a storage device 13, an arithmetic device 14, a reception device 11, and a transmission device 12.

The reception device 11 acquires air-conditioning operation data 36 from the air conditioner 2 at predetermined time intervals, and stores the acquired data in the storage device 13. The reception device 11 acquires sensor data 37 from the sensors 3 at predetermined time intervals, and stores the acquired data in the storage device 13. The predetermined time interval is, for example, 5 minutes. In Embodiment 1, the time intervals of data acquisition from the air conditioner 2 and the sensors 3 by the reception device 11 are the same, but the time interval of data acquisition from the air conditioner 2 may differ from the time interval of data acquisition from the sensors 3. When the arithmetic device 14 determines a control command for the air conditioner 2, the transmission device 12 transmits the determined control command to the air conditioner 2.

The storage device 13 stores an analysis condition list 131, device and space information 132, an airflow analysis model 133, pattern data 134, a target condition 135, measurement data 136 including the air-conditioning operation data 36 and the sensor data 37, a control mode list 137, a variable importance level table 138, a comfort level table 139, and a comfort level function 140. The storage device 13 is, for example, a hard disk drive (HDD). The storage device 13 may be a semiconductor memory. Information stored in the storage device 13 illustrated in FIG. 3 is described with reference to FIGS. 4 to 6.

FIG. 4 is a conceptual diagram illustrating an example of the analysis condition list 131 illustrated in FIG. 3. A plurality of analysis conditions including combinations of outlet conditions and load conditions is set in the analysis condition list 131. In the example illustrated in FIG. 4, a pattern name, an operation mode, a priority level, a load condition, an outlet condition, and a pattern generation status are stored in association with an identifier of each analysis condition. The pattern generation status shows whether the airflow is analyzed under the analysis condition and pattern data is generated from the result of the airflow analysis. The pattern data is described in detail later.

As illustrated in FIG. 4, a priority level is assigned to each analysis condition. In Embodiment 1, the priority level is represented by a positive integer. For example, "1" is assigned as the highest priority level, and "10" is assigned as the lowest priority level. As the priority levels, unique integers may be assigned to the respective analysis conditions or overlapping integers may be assigned to the analysis conditions. For example, the priority level "1" may be assigned to a plurality of analysis conditions or to a single analysis condition.

The priority level to be assigned to each analysis condition is set, for example, on the basis of the air-conditioning operation data 36. As the occurrence frequency of an operation state out of the past operation states of the air conditioner 2 increases, a higher priority level is assigned to the analysis condition associated with this operation state. The occurrence frequency is calculated from performance data of the operation state stored in the storage device 13 within a predetermined period such as a past constant period (three months). A specific example of the occurrence frequency is described.

To simplify the description, a case is described where the outlet condition greatly affects the occurrence frequency of the operation state, and the occurrence frequency is obtained, for example, as follows. In the performance data, occurrence counts of agreement with set values are measured for variables of temperature, airflow volume, and airflow direction at the air outlet. In these occurrence counts, an occurrence count of agreement of the three variables with their set values is defined as the occurrence frequency. When the indoor unit 22 has a plurality of air outlets, the occurrence frequency is calculated for each air outlet.

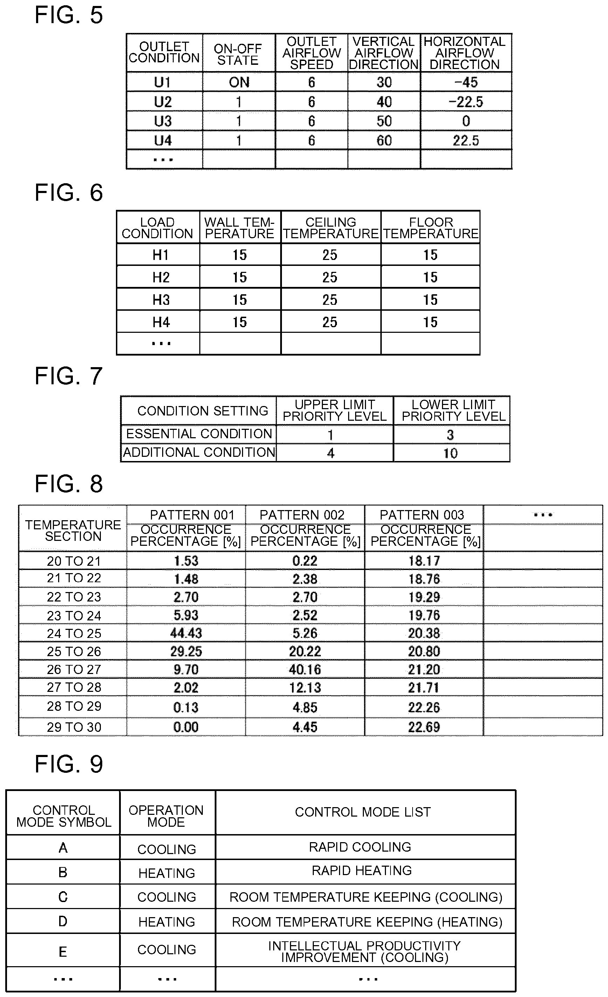

FIG. 5 is a conceptual diagram illustrating an example of outlet conditions related to the operation state of the air conditioner 2 among the analysis conditions illustrated in FIG. 4. The outlet condition includes conditions such as a state of the compressor 51 and an outlet airflow speed and an outlet airflow direction at the air outlet of the indoor unit 22. The state of the compressor 51 is an on-off state where the compressor 51 is on or off. The outlet airflow direction is information including the lateral airflow direction and the vertical airflow direction.

The outlet condition may include an outlet airflow volume and an outlet temperature. The indoor unit 22 may have one air outlet or a plurality of air outlets, and a plurality of indoor units 22 may be installed in a room that is a common air-conditioning target space. When the indoor unit 22 has a plurality of air outlets, the outlet condition is a combination of outlet conditions set for the respective air outlets. When a plurality of indoor units 22 is installed in a room, the outlet condition is a combination of outlet conditions set for the air outlets of the respective indoor units 22.

FIG. 6 is a conceptual diagram illustrating an example of load conditions among the analysis conditions illustrated in FIG. 4. The load condition is related to flow of heat into and out of a room. For example, the load condition includes a boundary condition, a heat passage condition, and a heat generation condition. The boundary condition is related to inflow and outflow of heat caused by a temperature difference between inside and outside of a room through a boundary such as a wall in the room where the air conditioner 2 is installed. The heat passage condition is related to flow of heat into and out of a room through an opening such as a window and a door. The heat generation condition is related to the amount of heat generated in a room because of a human body, office automation equipment, or other factors.

FIG. 6 is a table showing conditions related to flow of heat into and out of the air-conditioning target space as an example of the load condition. The load condition illustrated in FIG. 6 shows part of the boundary condition, the heat passage condition, and the heat generation condition. In the load condition table, values of the surface temperature of a wall, the surface temperature of a ceiling, and the surface temperature of a floor are set in association with an identifier of each load condition. In FIG. 6, the surface temperature of the wall is referred to as a wall temperature $Tw$, the surface temperature of the ceiling is referred to as a ceiling temperature $Tc$, and the surface temperature of the floor is referred to as a floor temperature $Tf$.

In a load condition H1, the wall temperature $Tw = 15$ °C, the ceiling temperature $Tc = 25$ °C, and the floor temperature $Tf = 15$ °C. In FIG. 6, for example, the expression "$Tw = 15$ °C" is not limited to the case where the wall temperature is equal to 15 °C, and may include a case where the wall temperature is within a permissible range of $\pm \Delta T$ with its central value being 15 °C. For example, $\Delta T$ is 2 °C.

FIG. 7 is a conceptual diagram illustrating an example of a priority level management table in which priority levels are managed by numerical ranges. In the example illustrated in FIG. 7, the priority levels are set and managed for two conditions that are an essential condition and an additional condition. An upper limit priority level and a lower limit priority level are set in each of the essential condition and the additional condition. The range of priority levels of analysis conditions in which airflow control can be started is set in the essential condition. Specifically, the essential condition shows that the airflow control can be started when airflow analysis is performed from an analysis condition having the upper limit priority level to an analysis condition having the lower limit priority level.

The range of priority levels of analysis conditions in which airflow analysis is performed after the start of the airflow control is set in the additional condition. Specifically, the additional condition shows that, after the start of the airflow control, airflow analysis from an analysis condition having the upper limit priority level to an analysis condition having the lower limit priority level and accumulation of the analysis results can be performed in parallel to the airflow control. The priority level management table is not illustrated.

In the example illustrated in FIG. 7, an integer "1" is set as the upper limit priority level and an integer "3" is set as the lower limit priority level in the essential condition. In this case, the airflow control can be started when airflow analysis is completed for analysis conditions having priority levels of 1 or more and 3 or less. In the additional condition, an integer "4" is set as the upper limit priority level and an integer "10" is set as the lower limit priority level. In this case, after the start of the airflow control, airflow analysis for analysis conditions having priority levels of 4 or more and 10 or less and accumulation of the analysis results can be performed in parallel to the airflow control. Although the upper limit priority level is 1 and the lower limit priority level is 3 in the essential condition in the example illustrated in FIG. 7, the lower limit priority level may be 1, which is equal to the upper limit priority level.

The device and space information 132 is necessary for creation of the airflow analysis model 133, and includes space information and device information. The space information is related to the air-conditioning target space where the air conditioner 2 is installed. For example, the space information includes the shape of the room that is the air-conditioning target space, layout of a window, a door, and furniture, and heat insulation performance exhibiting the thermal property of the wall. The device information is related to the performance of the air conditioner 2. For example, the device information includes the position of the air outlet of the air conditioner 2, the power and efficiency of the air conditioner 2, and settable outlet temperatures, airflow volumes, and airflow directions. The described information is illustrative and the device and space information 132 is not limited to such information.

For example, the airflow analysis model 133 is used for computational fluid dynamics (CFD) analysis. The airflow analysis model 133 is created on the basis of the device and space information 132 and the analysis conditions in the analysis condition list 131.

FIG. 8 is a conceptual diagram illustrating an example of the pattern data illustrated in FIG. 3. The pattern data is created on the basis of results of airflow analysis, and shows the tendency of distribution of environment including a temperature and an airflow speed in the air-conditioning target space. The variables such as the temperature and the airflow speed included in the pattern data and showing the environment of the air-conditioning target space may be any other variable than the temperature and the airflow speed and the number of variables may be one or plural as long as a variable is an index of heating energy or a variable related to comfort in the indoor space.

The types and the number of variables set in the variable importance level table 138 described later are the same as those of the variables included in the pattern data. The pattern data 134 illustrated in FIG. 3 means information such as a table in which a plurality of pieces of pattern data is recorded. A method for generating the pattern data illustrated in FIG. 8 is described later.

FIG. 9 is a conceptual diagram illustrating an example of the control mode list 137 illustrated in FIG. 3. The control mode list 137 stores control modes for cooling and heating. The control mode is a term of control by use of cooling or heating for obtaining a temporal or spatial effect in the air-conditioning target space unlike the operation modes of the air conditioner 2. Examples of the control mode include rapid cooling and heating, cooling and heating for keeping room temperature, cooling and heating for improving user's intellectual productivity, cooling focusing on user's sense of airflow, and intensive heating for user's feet. In the control mode list 137, a symbol and an operation mode are associated with each control mode and correspond to a control mode symbol in the variable importance level table 138 described next.

The variable importance level table 138 stores importance levels of the variables such as the temperature and the airflow speed in the air-conditioning target space for use in the pattern data in association with each control mode and each operation mode stored in the control mode list 137.

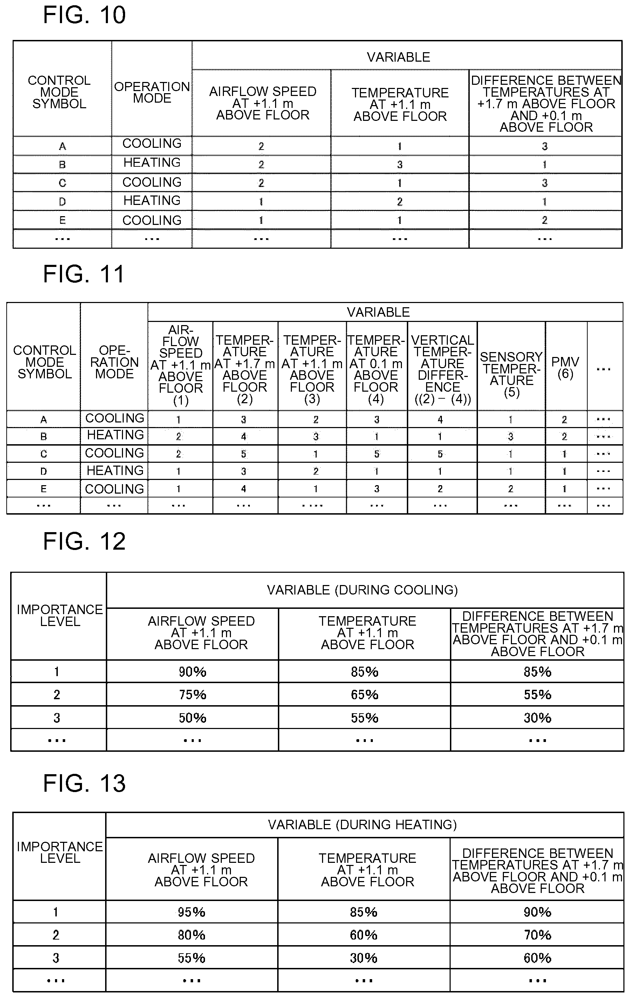

FIG. 10 is a conceptual diagram illustrating an example of the variable importance level table 138 illustrated in FIG. 3. The variable importance level in one control mode is represented by an integer equal to or larger than 1 and equal to or smaller than a numerical value corresponding to the number of variables in the variable importance level table 138, and is the numerical value "1" shows the highest importance. The importance level is prestored for each control mode, but may be updated by the user. The types and the number of variables stored in the variable importance level table 138 are the same as the types and the number of variables in the pattern data, such as the temperature and the airflow speed in the air-conditioning target space.

FIG. 10 illustrates a case where the variables included in the pattern data are three variables that are "airflow speed at 1.1 m above floor", "temperature at 1.1 m above floor", and "difference between temperatures at +1.7 m above floor and +0.1 m above floor", and the importance levels of the variables are shown for each control mode illustrated in FIG. 9.

For example, when the control mode is "A: rapid cooling", the most important element is to reduce the temperature at the user's work plane height to a temperature within the range of comfort, and the importance level of "temperature at 1.1 m above floor" is set to 1 (most important). The next important element is that the user feels comfort from the airflow, and the importance level of "airflow speed at 1.1 m above floor" is set to 2. The difference between temperatures at the heights of the user's head and feet is not a very important element during cooling, and the importance level of "difference between temperatures at +1.7 m above floor and +0.1 m above floor" is set to 3.

When the control mode is "D: room temperature keeping (heating)", the most important element is to suppress a draft feeling due to a heating airflow and to prevent an increase in the difference between temperatures at the heights of the user's head and feet, and the importance levels of "airflow speed at 1.1 m above floor" and "difference between temperatures at +1.7 m above floor and +0.1 m above floor" are set to 1 (most important). The importance level of "temperature at 1.1 m above floor" is set to 2 because this temperature is expected to increase along with the increase in the temperature at the height of feet. In this way, the variable importance level table 138 stores the importance levels of the variables in each control mode. The importance levels are similarly stored in the other control modes.

FIG. 11 is a conceptual diagram illustrating an example in which the variables in the variable importance level table 138 are different. The variables stored in the variable importance level table 138 may be different from the variables stored in FIG. 10 as long as the variables are the same as the variables in the air-conditioning target space included in the pattern data. For example, when a user's sensory temperature, a radiation temperature, and a predicted mean vote (PMV) are used as the variables in the pattern data, these variables are added to the variable importance level table 138 as illustrated in FIG. 11.

That is, the variables show the environment of the air-conditioning target space. The environment may be any evaluation factor for the air conditioning of the air-conditioning target space, including an airflow speed, a temperature, a temperature difference, a sensory temperature, a radiation temperature, a PMV, and a power consumption. The variable importance level table 138 stores the importance levels of the variables showing the environment of the air-conditioning target space for each control mode.

The comfort level table 139 stores a target value of the proportion of users who feel comfort separately during cooling and heating in association with each control mode and the importance level of each variable stored in the variable importance level table 138. The comfort level is a numerical value of 0% to 100%. The comfort level "100%" means the highest comfort. For example, when the comfort level of the variable is 80%, it means that the airflow control is performed such that 80% of the users in the air-conditioning target space can feel comfort about the variable.

The comfort level is highest at the importance level "1". Regarding the comfort levels at lower importance levels, the comfort level is lower than the comfort level at a higher importance level in the next tier. In Embodiment 1, the comfort level is the proportion of users who feel comfort, but is not limitative, and may be any index showing comfort. The comfort level table 139 stores the comfort levels of the variables for each importance level. Examples of the comfort level table 139 are described with reference to FIGS. 12 to 14.

FIG. 12 is an example of a cooling comfort level table 139 associated with the control modes and the variables in the variable importance level table 138 illustrated in FIG. 10. For example, regarding "airflow speed at 1.1 m above floor", it is desirable that the proportion of users who feel discomfort from a draft airflow be reduced in any control mode. Therefore, the comfort level is set to 90% at the importance level "1", 75% at the importance level "2", and 50% at the importance level "3". In this way, the comfort level may be stored such that the proportion of users who feel comfort is relatively higher than those for the other variables even when the importance level is low.

FIG. 13 is an example of a heating comfort level table 139. For example, "temperature at 1.1 m above floor" is expected to increase along with the temperature at the height of feet as described above in the example of "D: room temperature keeping (heating)", and the comfort level need not essentially be high depending on the control modes. For this reason, the comfort level is set to 85% at the importance level "1", 60% at the importance level "2", and 30% at the importance level "3". In this way, the proportion of users who feel comfort is set to decrease as the importance level decreases.

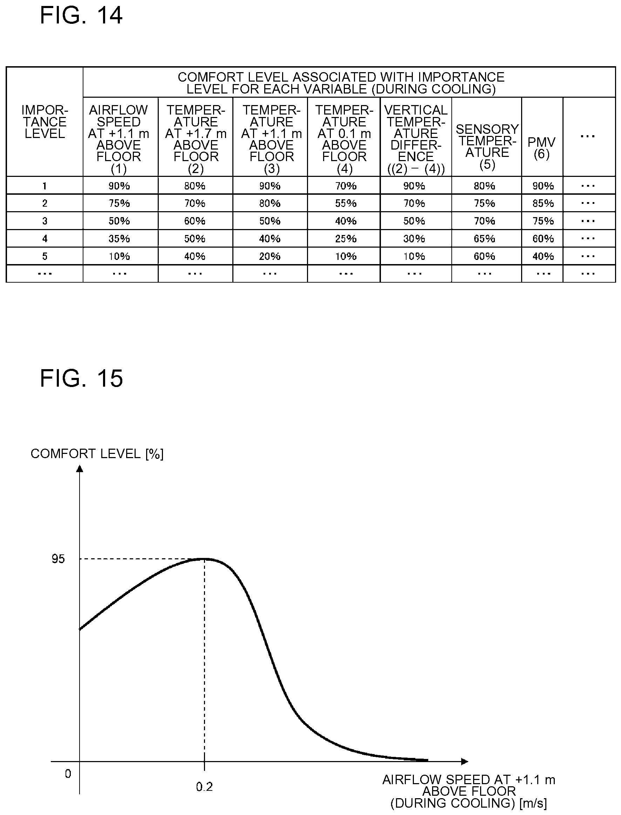

FIG. 14 is an example of a cooling comfort level table 139 associated with the variable importance level table 138 illustrated in FIG. 11. The comfort levels stored in the comfort level table 139 can be changed later by the user on the basis of environment outside the building or other environment. For example, when the outside environment is a cold climate region, the temperature at the height of feet is likely to be lower than those in other regions because of air flowing into the room through a gap. Therefore, the user may feel discomfort about the cold around the feet.

In this region, the comfort level for the temperature at the height of feet is set to 90% at the importance level "1", 80% at the importance level "2", and 70% at the importance level "3" such that the proportion of users who feel comfort is higher even when the importance level is low. Thus, the user is unlikely to feel discomfort about the cold around the feet compared with other regions.

The comfort levels stored in the comfort level table 139 can be changed in consideration of, for example, the shape of the air-conditioning target space and the user's preferences about heating energy environment. For example, when the shape of the air-conditioning target space is taken into consideration and is an L-shape or a C-shape in which the airflow of air conditioning is unlikely to reach every part of the room, the comfort levels for "airflow speed at 1.1 m above floor" and "temperature at 1.1 m above floor" at each importance level are changed to higher levels than those in a square room. Thus, the air conditioning can be performed such that the airflow can reach every part of the room.

When the user's preferences about heating energy environment are taken into consideration and many users on the floor prefer the sense of airflow, the comfort level for "airflow speed at 1.1 m above floor" at each importance level is changed to a higher level than those on the other floors. Thus, the air conditioning can be performed such that a relatively large amount of airflow of air conditioning can impinge on the users. The factors for the comfort level change are illustrative and the comfort levels may be changed from other factors. Examples of the other factors include the power and the number of the air conditioners 2 and the male-to-female ratio of the users in the air-conditioning target space.

FIGS. 15 to 17 are conceptual diagrams illustrating examples of the comfort level function 140 illustrated in FIG. 3. The comfort level function 140 refers to a correlation function of the indoor variable and the user's comfort level during cooling or heating and its graph. The comfort level function 140 defines the relationship between the value of each variable and the comfort level. In the comfort level function 140, the horizontal axis represents one variable and the vertical axis represents the user's comfort level. Examples of a cooling comfort level function 140 are described with reference to FIGS. 15 to 17.

FIG. 15 is an example of a comfort level function 140 for "airflow speed at 1.1 m above floor" during cooling. In FIG. 15, the proportion of users who feel comfort increases along with an increase in the airflow speed in an airflow speed range of 0 to 0.2 m/s, the comfort level is maximum at 0.2 m/s, and the proportion of users who feel comfort decreases along with the increase in the airflow speed in a range higher than 0.2 m/s.

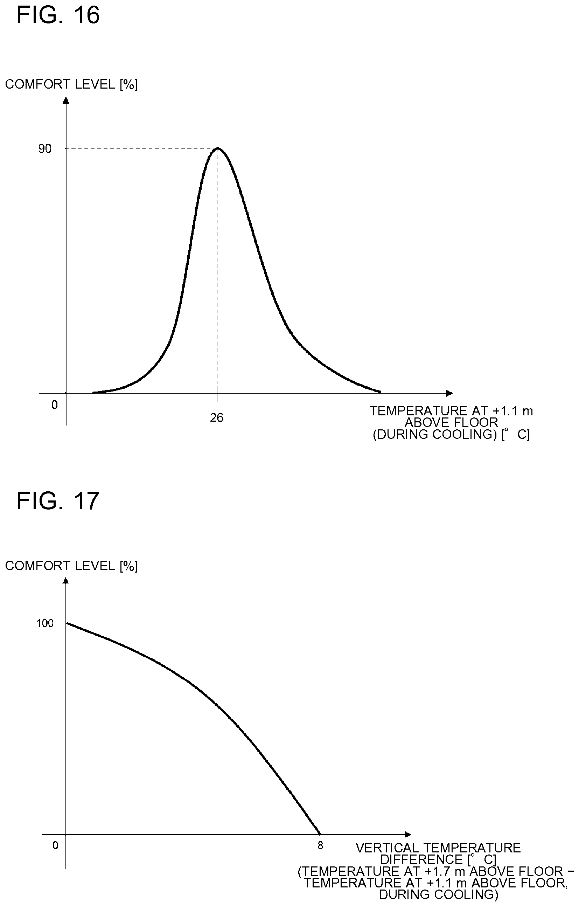

FIG. 16 is an example of a comfort level function 140 for "temperature at 1.1 m above floor" during cooling. In FIG. 16, the comfort level is maximum at a temperature of 26 °C, and the proportion of users who feel comfort decreases in the other range from the maximum value at 26 °C.

FIG. 17 is an example of a comfort level function 140 for "difference between temperatures at +1.7 m above floor and +0.1 m above floor" during cooling. In FIG. 17, the users feel the highest comfort when the temperature difference is 0 °C, and the proportion of users who feel comfort decreases as the temperature difference increases higher than 0 °C.

A function domain is preset for the comfort level function 140. The domain is a numerical range of the variable in which the comfort level is defined in the comfort level function 140. For example, the domain of the comfort level function 140 for "difference between temperatures at +1.7 m above floor and +0.1 m above floor" during cooling in FIG. 17 is 0 °C to 8 °C. The domain of the comfort level function 140 may be set on the basis of the target condition 135 described later.

The comfort level function 140 may be cited from a known document or obtained from results of experiments. The comfort level function 140 is not limited to the two-dimensional planar graph with two axes, but may be a three-dimensional spatial graph with three axes in simultaneous consideration of two indoor variables. For example, a comfort level function 140 with "airflow speed at 1.1 m above floor" on the X axis, "temperature at 1.1 m above floor" on the Y axis, and the comfort level on the Z axis may be used to show the comfort level in simultaneous consideration of the airflow speed and the temperature at the user's position.

The value of the variable on the horizontal axis of the comfort level function 140 need not essentially be the absolute value of the variable, and may be a relative value from a different reference value. For example, a reference value at which the users generally feel comfort may be set and a relative value showing the difference from the reference value may be used on the horizontal axis. Alternatively, a value using a representative or average value in the air-conditioning target space obtained from values measured as the sensor data 37 described later may be used on the horizontal axis.

A relative value showing the difference between the value measured as the sensor data 37 at an arbitrary point in the air-conditioning target space and a target value set in the target condition 135 described next or a set value such as a set temperature included in the air-conditioning operation data 36 may be used on the horizontal axis.

The target condition 135 is a setting condition for a target environment to be created by the operation of the air conditioner 2 in the air-conditioning target space. Examples of the target condition 135 include an upper limit value and a lower limit value of a range to be satisfied in the air-conditioning target space for a variable such as the temperature and the airflow speed. The target condition 135 may be a setting condition for one variable or setting conditions for a plurality of variables. For example, the target condition 135 may be set for the outlet condition that is a combination of a plurality of variables. The target condition 135 may include a target value of each variable and may be set by the user via the remote controller (not illustrated).

The difference between the target condition 135 and the analysis condition having a high priority level is described. The target condition 135 is a setting condition for creating an ideal environment derived from the air-conditioning target space or an ideal environment comfortable to the user. On the other hand, the analysis condition having a high priority level is an analysis condition in which the airflow analysis is performed with priority for airflow control necessary to create the environment under the target condition 135 in conjunction with the current environment of the air-conditioning target space.

The target condition 135 may include the domain of the comfort level function 140 for each variable. The range of the variable set in the target condition 135 and to be satisfied in the air-conditioning target space and the domain of the comfort level function 140 may be the same value or different values independent of each other.

The target value of each variable in the target condition 135 may be used as a reference of the comfort level set in the comfort level table 139. For example, when the target value of the temperature at 1.1 m above the floor that is set in the target condition 135 is 26 °C, the comfort level for the temperature at 1.1 m above the floor at the importance level "1" in the comfort level table 139 may be the comfort level at the temperature of 26 °C at 1.1 m above the floor in the comfort level function 140.

The air-conditioning operation data 36 is, for example, information on the set values such as a set temperature, an airflow volume, a lateral airflow direction, and a vertical airflow direction and their operation states, and information for use in air-conditioning control, such as a room temperature, an outside air temperature, a refrigerant temperature, and a refrigerant flow rate. The information for use in air-conditioning control is measured by the sensors 3 provided in the air conditioner 2.

The sensor data 37 is measured by the sensors 3 such as a temperature sensor installed in the room. When the sensors 3 are provided in the air conditioner 2, the air-conditioning operation data 36 may include the sensor data 37.

Next, the configuration of the arithmetic device 14 illustrated in FIG. 3 is described. The arithmetic device 14 includes model creation circuitry 141, airflow analysis circuitry 142 that performs airflow analysis for each analysis condition, pattern generation circuitry 143 that generates pattern data from analysis results, and airflow control circuitry 144 that controls the airflow of the air conditioner 2 from the pattern data or the analysis results. Although illustration is omitted, the arithmetic device 14 includes evaluation value calculation circuitry that calculates an evaluation value.

The model creation circuitry 141 creates a model for use in airflow analysis. First, the model creation circuitry 141 performs a process of creating shape data in which a room shape, layout of a window and furniture, and the position of the air outlet of the air conditioner 2 are specified on the basis of the device and space information 132, and dividing the analysis target region into a plurality of small spaces.

The model creation circuitry 141 sets, on the basis of the analysis condition, a condition related to inflow and outflow of heat between the wall and the analysis target region, a heat generation condition related to heat generation from, for example, a human body and office automation equipment in consideration of the position of furniture, an inlet condition related to an inlet temperature and a three-dimensional inlet airflow speed at the position of an air inlet, and an outlet condition related to an outlet airflow volume or other variables at the air outlet.

The airflow analysis circuitry 142 performs calculation on the airflow analysis model 133 by CFD analysis or other method to obtain distributions of indoor temperature and airflow speed in the air-conditioning target space. For example, the airflow analysis circuitry 142 divides the air-conditioning target space into many small regions, and calculates the temperatures and the airflow speeds in the small regions by use of the airflow analysis model 133.

[Math. 1]

$$\nabla \cdot u = 0 \qquad \qquad \ldots (1)$$

[Math. 2]

$$\rho \left( \frac{\partial u}{\partial t} + (u \cdot \nabla u) \right) = -\nabla p + \nabla \cdot (\mu \nabla u) + (\rho - \rho_0)g \qquad \qquad \ldots (2)$$

[Math. 3]

$$C_p \left( \frac{\partial T}{\partial t} + u \cdot \nabla T \right) = \nabla \cdot (k \nabla T) + Q \qquad \qquad \ldots (3)$$

In these equations, u is a three-dimensional velocity vector, t is time, p is a pressure, $\rho$ is a density, $\mu$ is a coefficient of viscosity, $\rho_0$ is a reference density, g is a gravitational acceleration, $C_p$ is specific heat under constant pressure, T is a temperature, k is thermal conductivity, and Q is an internal heat generation amount.

Equation (1) is a continuous equation showing mass conservation of fluid. Equation (2) is an incompressible Navier-Stokes equation showing momentum conservation. Equation (3) is an energy equation. The airflow analysis circuitry 142 calculates the temperature and the airflow speed in each divided region by solving Equations (1) to (3) under appropriate initial values and an appropriate boundary condition. In this case, the air-conditioning operation data 36 of the air conditioner 2 and the sensor data 37 are used as initial values and boundary condition values in the airflow analysis.

Priority levels are assigned to the analysis conditions included in the airflow analysis model 133, and the airflow analysis circuitry 142 performs the airflow analysis in the order of the priority levels. Airflow control can be started after completion of the airflow analysis for the analysis conditions having predetermined priority levels. The airflow control circuitry 144 performs the airflow control at predetermined time intervals (e.g., 5 minutes). In this period, the airflow analysis circuitry 142 may suspend the calculation for the analysis conditions that have not undergone the airflow analysis, or may continue the calculation by parallel processing.

For example, when a high priority level is assigned to an analysis condition associated with an operation state whose occurrence frequency is high out of the past operation states of the air conditioner 2, the airflow control circuitry 144 can start the airflow control by use of the airflow analysis at an early stage for the operation state having high operation performance. In this case, the air conditioner 2 can start the most efficient operation at an early stage among the operation states having operation performance in the past.

Regarding operation states having low operation performance, the airflow analysis circuitry 142 continues the airflow analysis after the start of the airflow control to accumulate analysis results of the analysis conditions associated with the operation states having low operation performance. Then, the airflow control circuitry 144 can also have the operation states having low operation performance as options for the airflow control.

The pattern generation circuitry 143 performs a statistical process for the airflow analysis results to generate pattern data showing the tendency of distribution of the environment of the air-conditioning target space with less variables than those of the airflow analysis results. The storage device 13 stores the generated pattern data to reduce the stored data size compared with the case where the airflow analysis results are stored. FIG. 8 is a conceptual diagram illustrating an example of the pattern data. When the temperature is an example of the variable, the pattern generation circuitry 143 generates the pattern data as follows.

First, the pattern generation circuitry 143 divides the room that is the air-conditioning target space into a plurality of small regions, and extracts measured values of temperatures in a region where residents may be present from the measured values of temperatures in the small regions. The region where the residents may be present is, for example, a region at the height of 1.1 m above the floor.

Next, the pattern generation circuitry 143 sets a plurality of temperature ranges on the basis of preset upper and lower limit values of temperature and the division count of temperature ranges. The pattern generation circuitry 143 projects the small regions included in the temperature ranges onto a plane parallel to the floor, and generates pattern data showing temperature distribution such that the total of the percentage of the areas on the projected plane reaches 100%.

In the example of FIG. 8, when the lower limit of the temperature range is 20 °C, the upper limit is 30 °C, and the unit for temperature division is 1 °C, ten sections are set, namely a first section of 20 °C or more and less than 21 °C, a second section of 21 °C or more and less than 22 °C, ..., and a tenth section of 29 °C or more and less than 30 °C. When the temperature range is divided into the ten sections, the pattern data shows an occurrence percentage (%) that is the ratio of the small region in each temperature range to the region where the residents may be present.

Variation of the pattern data depending on patterns is described with reference to FIG. 8. In pattern data with a pattern name "pattern 001", the occurrence percentage of the fifth section is 44.43% and the occurrence percentage of the seventh section is 9.7%. On the other hand, in pattern data with a pattern name "pattern 002", the occurrence percentage of the fifth section is 5.26% and the occurrence percentage of the seventh section is 40.16%. It is understood that the room temperature is higher in the pattern with the pattern name "pattern 002" than in the pattern with the pattern name "pattern 001".

The pattern data generation method described with reference to FIG. 8 is illustrative, and any other method may be employed. The variable is not limited to the temperature. Even when the variable is an airflow speed, a humidity, a comfort index, or other variables, the pattern generation circuitry 143 can generate pattern data as in the case where the variable is the temperature. The variable is not limited to that in the region at the height of 1.1 m above the floor. Even in a region at 0.1 m above the floor corresponding to the height around the user's feet, a region at 1.7 m above the floor corresponding to the height around the head of the standing user, a region at a height from 0.1 m to 1.7 m above the floor, or other regions, the pattern generation circuitry 143 can generate pattern data as in the region at the height of 1.1 m above the floor.

The number of variables is not limited to one, and may be plural. The pattern data is represented by frequency distribution on the basis of one or more of the indoor temperature, the humidity, the airflow speed, the comfort index, or other variables in the analysis results. The types and the number of the variables set in the variable importance level table 138 are the same as those of the variables included in the pattern data.

When the airflow analysis results are replaced with the pattern data, the data size of the analysis results can be reduced and the storage capacity of the storage device 13 can be reduced. With the pattern data, an index of temperature unevenness in the room can be calculated from the pattern data and an evaluation value can be calculated. That is, weighting factors can be determined by determination on comfort in consideration of the state of the entire room, such as the temperature unevenness.

The airflow control circuitry 144 includes airflow control performability determination circuitry 41, operation state determination circuitry 42, control command conversion circuitry 43, and factor calculation circuitry 44. The airflow control performability determination circuitry 41 determines whether the airflow control can be started on the basis of the pattern data generation status in the pattern generation circuitry 143. The pattern data is generated for an analysis condition having a priority level. The airflow control performability determination circuitry 41 determines that the airflow control can be started when the pattern data generation is completed for all the analysis conditions having high priority levels.

The operation state determination circuitry 42 includes the factor calculation circuitry 44. When the airflow control performability determination circuitry 41 determines that the airflow control can be started, the operation state determination circuitry 42 determines the operation state of the air conditioner 2 by selecting a pattern in which the environment closest to that in the target condition 135 can be achieved from among the plurality of pieces of generated pattern data on the basis of the measurement data 136 and weighting factors determined by the factor calculation circuitry 44 described next and to be used for calculation of the evaluation value of the pattern data.

The operation state determination circuitry 42 selects one control mode stored in the control mode list 137 on the basis of the measured values of the indoor environment measured as the sensor data 37, and outputs the control mode to the factor calculation circuitry 44. The control mode may be set by the user via the remote controller (not illustrated) from the control mode list 137.

The control mode is selected, for example, by a method in which determination is made as to whether the operation state of the air conditioner 2 is a transient state or a stable state and the control mode is determined in association with the operation state. The transient state is a state of a nonstationary process, for example, immediately after the activation of the air conditioner 2. The determination on the operation state of the air conditioner 2 is made, for example, by acquisition of information on an inlet temperature and a set temperature from the air conditioner 2 and comparison of the temperature difference between the inlet temperature and the set temperature with a predetermined threshold temperature.

When the temperature difference between the inlet temperature and the set temperature is equal to or larger than the threshold temperature, the operation state determination circuitry 42 determines that the operation state of the air conditioner 2 is the transient state, and selects "rapid cooling" or "rapid heating" as the control mode. When the temperature difference between the inlet temperature and the set temperature is smaller than the threshold temperature, the operation state determination circuitry 42 determines that the operation state of the air conditioner 2 is the stable state, and selects "room temperature keeping (cooling)" or "room temperature keeping (heating)" as the control mode.

Since the airflow control circuitry 144 performs the airflow control at the predetermined time intervals (e.g., 5 minutes), the operation state determination circuitry 42 selects the control mode at the same time intervals. Thus, the control mode can be selected from the latest measured values of the indoor environment measured as the sensor data 37. Through such a flexible selection of the control mode on the basis of the latest measured values of the indoor environment, priority is given to the rate of achievement of the target value immediately after the activation of the air conditioner 2, and is given to the comfort after the air conditioner 2 is stable. Thus, the airflow control can be performed depending on the situation of the air conditioner 2.

The method for the determination on the operation state of the air conditioner 2 is not limited to the determination method described above. The determination on the operation state of the air conditioner 2 may be made on the basis of whether an elapsed period from the start of the activation is equal to or longer than a predetermined threshold period. When the elapsed period from the start of the activation of the air conditioner 2 is shorter than the threshold period, determination is made that the operation state of the air conditioner 2 is the transient state. When the elapsed period from the start of the activation of the air conditioner 2 is equal to or longer than the threshold period, determination is made that the operation state of the air conditioner 2 is the stable state.

The operation state determination circuitry 42 may select a different control mode on the basis of the current time instead of the elapsed period from the start of the activation of the air conditioner 2. For example, in a time frame in which particularly high productivity is required within a general business time frame of 8:00 to 17:00, a control mode such as "intellectual productivity improvement (cooling)" and "intellectual productivity improvement (heating)" may be selected.

As described above, the airflow control on the air conditioner 2 is performed on the basis of the control mode that is the name of control by use of cooling or heating for the temporal or spatial effect in the air-conditioning target space, instead of the operation mode such as "cooling" and "heating". Thus, a multi-purpose air-conditioned space with no limitation to comfort from heating energy or a high-quality air-conditioned space with additional value to thermal comfort can be achieved, as exemplified by an air-conditioned space intended for improvement in the user's intellectual productivity.

The factor calculation circuitry 44 determines weighting factors of the variables such as the temperature and the airflow speed for use in the calculation of the evaluation value by use of the control mode selected by the operation state determination circuitry 42, the importance levels of the variables stored in the variable importance level table 138 and associated with the control mode, the comfort levels stored in the comfort level table 139 and associated with the importance levels of the variables, and the comfort level functions 140 for the variables set on the horizontal axes.

The factor calculation circuitry 44 calculates the weighting factor of each variable on the basis of the comfort level function 140 that defines the relationship between the value of the variable and the comfort level, and the comfort level that is associated with the importance level of the variable associated with the control mode and is identified from the variable importance level table 138 and the comfort level table 139. A specific procedure for determination of the weighting factor by the factor calculation circuitry 44 is described below. The description is made with reference to FIG. 13.

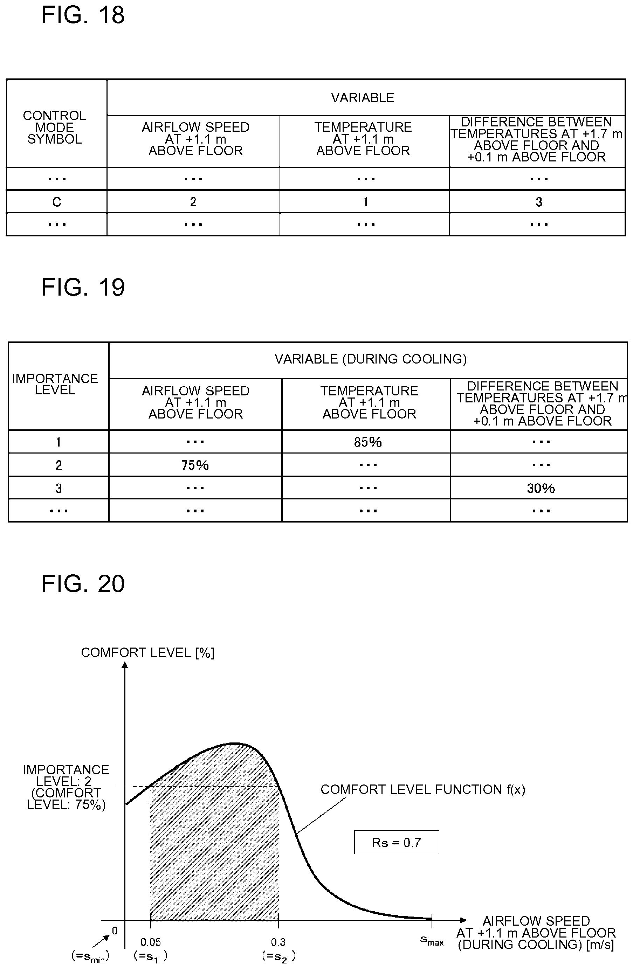

FIGS. 18 and 19 are conceptual diagrams illustrating examples of the variable importance level table 138 and the comfort level table 139 for use in the description of the method for determining the weighting factors by the factor calculation circuitry 44. First, the factor calculation circuitry 44 searches the control mode symbol column stored in the variable importance level table 138 for the same control mode symbol as the control mode symbol representing the control mode selected by the operation state determination circuitry 42, and acquires the importance levels of the variables included in a row in which the same control mode symbol is stored.

For example, a case is described where the operation state determination circuitry 42 selects "C: room temperature keeping (cooling)" as the control mode from the control mode list 137 illustrated in FIG. 9.

FIG. 18 is a diagram illustrating the concept that the factor calculation circuitry 44 refers to the variable importance level table 138 when the operation state determination circuitry 42 selects "C: room temperature keeping (cooling)" as the control mode.

In the above case, as illustrated in FIG. 18, the factor calculation circuitry 44 searches the control mode symbol column stored in the variable importance level table 138 for the control mode "C: room temperature keeping (cooling)" selected by the operation state determination circuitry 42, and acquires the importance levels of the variables included in a row in which the control mode "C: room temperature keeping (cooling)" is stored. In this case, as illustrated in FIG. 18, the factor calculation circuitry 44 acquires an importance level "2" for "airflow speed at +1.1 m above floor", an importance level "1" for "temperature at +1.1 m above floor", and an importance level "3" for "difference between temperatures at +1.7 m above floor and +0.1 m above floor".

Next, the factor calculation circuitry 44 acquires, from the comfort level table 139, the comfort levels associated with the importance levels of the variables acquired from the variable importance level table 138.

FIG. 19 is a diagram illustrating the concept that the factor calculation circuitry 44 refers to the comfort level table 139 when the factor calculation circuitry 44 acquires the importance levels of the variables in the control mode illustrated in FIG. 18.

In the above case, as illustrated in FIG. 19, the factor calculation circuitry 44 acquires a comfort level "75%" at the importance level "2" for "airflow speed at +1.1 m above floor", a comfort level "85%" at the importance level "1" for "temperature at +1.1 m above floor", and a comfort level "30%" at the importance level "3" for "difference between temperatures at +1.7 m above floor and +0.1 m above floor".

Next, on the basis of the comfort level acquired from the comfort level table 139 and associated with the importance level of each variable and the comfort level function 140 for the variable, the factor calculation circuitry 44 converts the range of the comfort level function 140 in which the acquired comfort level or more is satisfied into an area value of a region on the coordinate plane. On the basis of the comfort level function 140 for each variable and the upper and lower limit values of the domain of the comfort level function 140 for the variable, the factor calculation circuitry 44 converts the range of the comfort level function 140 within the domain into an area value of a region on the coordinate plane.

Processes performed by the factor calculation circuitry 44 are described below. FIGS. 20 to 22 are conceptual diagrams illustrating examples of the comfort level function 140 for use in the description of the method for determining the weighting factors by the factor calculation circuitry 44.

FIG. 20 illustrates a comfort level function 140 for "airflow speed at +1.1 m above floor" during cooling.

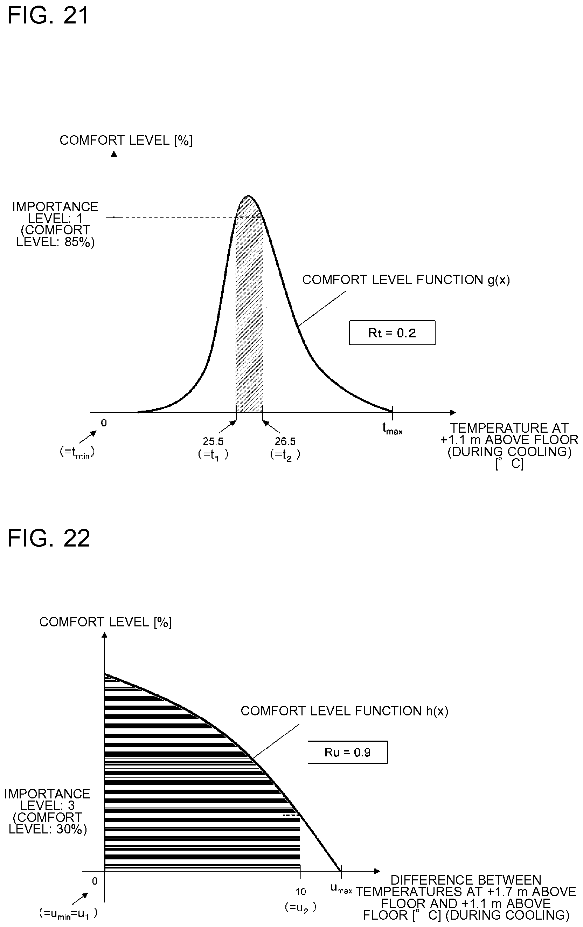

FIG. 21 illustrates a comfort level function 140 for "temperature at +1.1 m above floor" during cooling.

FIG. 22 illustrates a comfort level function 140 for "difference between temperatures at +1.7 m above floor and +0.1 m above floor" during cooling. FIGS. 20 to 22 are diagrams in each of which the comfort level acquired from the comfort level table 139 and associated with the importance level of each variable is reflected on the Y axis of the comfort level function 140 for the variable. FIGS. 20 to 22 are diagrams each illustrating a region (hatched portion in FIGS. 20 to 22) enclosed by a portion of the function that exhibits comfort levels equal to or higher than the comfort level reflected on the Y axis, the upper and lower limit values of the variable in this portion, and the X axis.

The factor calculation circuitry 44 calculates the ratio of the region of the comfort level function 140 in which the value of the comfort level or more is satisfied (referred to as a comfortable region) to the region defined within the domain of the comfort level function 140 (referred to as a defined region). The factor calculation circuitry 44 calculates the ratio of the comfortable region and the defined region by converting the comfortable region and the defined region into respective area values.

The process of calculating the area ratio of the comfortable region to the defined region by the factor calculation circuitry 44 is described. The area ratio of the comfortable region to the defined region can be calculated, for example, from Equations 4 to 6.

[Math. 4]

$$R_s = \frac{\int_{s_1}^{s_2} f(x)\, dx}{\int_{s_{min}}^{s_{max}} f(x)\, dx} \qquad \dots (4)$$

[Math. 5]

$$R_t = \frac{\int_{t_1}^{t_2} g(x)\, dx}{\int_{t_{min}}^{t_{max}} g(x)\, dx} \qquad \dots (5)$$

[Math. 6]

$$R_u = \frac{\int_{u_1}^{u_2} h(x)\, dx}{\int_{u_{min}}^{u_{max}} h(x)\, dx} \qquad \dots (6)$$

In these equations, Rs, Rt, and Ru are the area ratios [-] of the comfortable regions to the defined regions for "airflow speed at +1.1 m above floor", "temperature at +1.1 m above floor", and "difference between temperatures at +1.7 m above floor and +0.1 m above floor", respectively, and f(x), g(x), and h(x) are the comfort level functions 140 for the individual variables.

The symbols smin, smax, s1, and s2 are the upper and lower limit values [m/s] of the domain and the upper and lower limit values [m/s] of the airflow speed at +1.1 m above the floor at which the comfort level "75%" or more is satisfied in the comfort level function 140 for "airflow speed at +1.1 m above floor". The symbols tmin, tmax, t1, and t2 are the upper and lower limit values [°C] of the domain and the upper and lower limit values [°C] of the temperature at +1.1 m above the floor at which the comfort level "85%" or more is satisfied in the comfort level function 140 for "temperature at +1.1 m above floor".

The symbols umin, umax, u1, and u2 are the upper and lower limit values [°C] of the domain and the upper and lower limit values [°C] of the difference between the temperatures at +1.7 m above the floor and +0.1 m above the floor at which the comfort level "30%" or more is satisfied in the comfort level function 140 for "difference between temperatures at +1.7 m above floor and +0.1 m above floor".

When a domain is set in the target condition 135, smin may be larger than s1 or smax may be smaller than s2 depending on the domain. In this case, the lower limit value of s1 may be corrected to smin or the upper limit value of s2 may be corrected to smax. Such correction is not limited to that for the variable shown in Equation 4, and is similarly performed for the other variables.

In FIG. 20, s1 = 0.05 [m/s] and s2 = 0.3 [m/s]. In FIG. 21, t1 = 25.5 [°C] and t2 = 26.5 [°C]. In FIG. 22, u1 = 0 (= umin) [°C] and u2 = 10 [°C].

In FIGS. 20 to 22, the factor calculation circuitry 44 obtains Rs, Rt, and Ru as Rs = 0.7, Rt = 0.2, and Ru = 0.9, respectively, as a result of calculating the area ratios between the comfortable regions and the defined regions by use of these upper and lower limit values and Equations 4 to 6.

The values of the area ratios Rs, Rt, and Ru obtained for the individual variables tend to decrease as the importance levels or the comfort levels increase. Therefore, the variable whose area ratio is a smaller value needs to have a larger weight as an element of the environment. The method is, for example, subtraction from 1 or calculation of the inverse, and any other method may be employed.

Lastly, the factor calculation circuitry 44 calculates the weight as a factor of each variable from the area ratio obtained for the variable. For example, when the method of subtraction from 1 is employed as the method for converting Rs, Rt, and Ru obtained as illustrated in FIGS. 20 to 22 into larger weights for the variables as the values are smaller, the weights serving as factors of the variables are 1 - Rs = 0.3, 1 - Rt = 0.8, and 1 - Ru = 0.1 and the ratio is 0.3:0.8:0.1 = 3:8:1.

Thus, in the above case where the control mode is defined to be "C: room temperature keeping (cooling)", weighting factors $\alpha$, $\beta$, and $\gamma$ for "airflow speed at +1.1 m above floor", "temperature at +1.1 m above floor", and "difference between temperatures at +1.7 m above floor and +0.1 m above floor" can be calculated as $\alpha$:$\beta$:$\gamma$ = 3:8:1.

In the above case, when the method of calculation of the inverse instead of the method of subtraction from 1 is employed as the conversion method for obtaining larger weights as the factors of the variables having smaller area ratios, 1/Rs:1/Rt:1/Ru = 1/7:1/2:1/9 = 18:63:14. Thus, $\alpha$, $\beta$, and $\gamma$ in this conversion method can be calculated as $\alpha$:$\beta$:$\gamma$ = 18:63:14.

As described above, when the operation state determination circuitry 42 selects one control mode, the factor calculation circuitry 44 first acquires the comfort levels associated with the importance levels of the variables in the corresponding control mode by use of the comfort level functions 140 for the variables, then calculates the area values of the regions of the comfort levels or more, and lastly performs conversion to obtain larger weights serving as factors of the variables as the area values are smaller and calculates the ratio. Thus, the factor calculation circuitry 44 of the operation state determination circuitry 42 can determine the weighting factors that are weights serving as factors of the variables with a quantitative basis for comfort.

The evaluation value calculation circuitry calculates an evaluation value from the calculated weighting factors and the variables associated with a manipulation amount. Although description has been made that the variables are in common with those in the pattern data, functions may be used as well as the pattern data. Depending on the manipulation amount of the air conditioner, pieces of pattern data or outputs of the functions are determined for the variables, and the evaluation value is calculated such that the variables and the weighting factors associated with the variables are multiplied and added together. A more specific calculation method is described later. The operation state determination circuitry 42 determines a manipulation amount having a higher evaluation value as the manipulation amount of the air-conditioning apparatus.

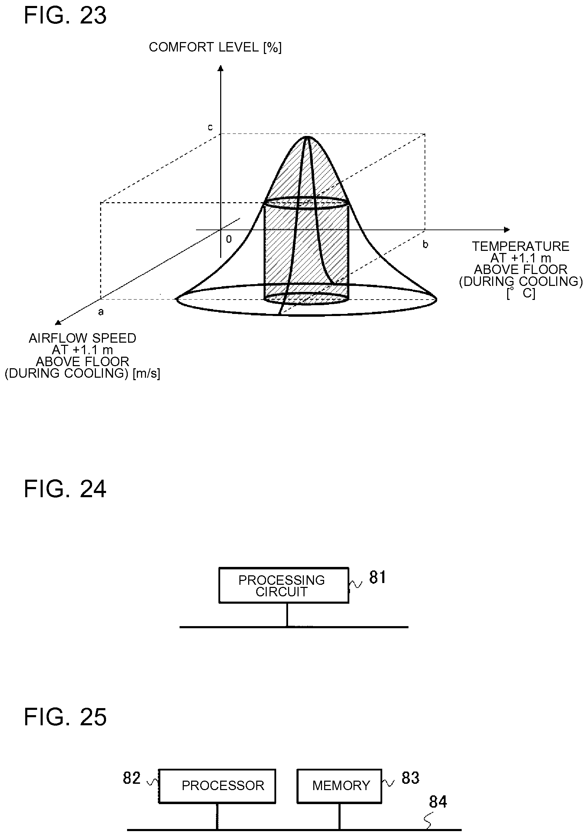

FIG. 23 is a conceptual diagram illustrating another example of the comfort level function 140 illustrated in FIG. 3. When the comfort level function 140 is not the two-dimensional planar graph with two axes but is a three-dimensional spatial graph with three axes including two axes showing two variables and one axis showing the comfort level as illustrated in FIG. 23, the factor calculation circuitry 44 uses a variable importance level table 138 (not illustrated) in simultaneous consideration of the two variables, a comfort level table 139 (not illustrated) in simultaneous consideration of the two variables, and the comfort level function 140 with three axes to convert the range of the comfort level function 140 in which the value equal to or higher than the comfort level associated with the importance levels of the two variables is satisfied into a volume value of a spatial region (referred to as a volume value of the comfortable region).

The factor calculation circuitry 44 calculates the ratio of this volume value to the volume of the entire region within the domain (referred to as a volume value of the defined region). The ratios of the volume values of the comfortable regions to the volume values within the domains are compared between the variables, larger weights serving as factors are obtained by conversion for the variables as the volume ratios are smaller, and the ratio of the weights are calculated. Thus, even when the two variables are taken into simultaneous consideration, the weights serving as factors of the variables can be calculated by the method similar to that in the case of the two-dimensional planar graph. When the three-dimensional spatial graph with three axes is used, Equations 4 to 6 are not calculation equations for the area of the region on the two-dimensional plane but calculation equations for the volume of the region on the three-dimensional plane.

When the weighting factors are calculated from the three-dimensional spatial graph with three axes, the combination of the two variables can be taken into consideration. Therefore, the evaluation value of the pattern data can be calculated in more detail than in the case where the two-dimensional planar graph with two axes is used. Thus, the airflow control can be performed with higher accuracy.

The control command conversion circuitry 43 converts the operation state that is the manipulation amount determined by the operation state determination circuitry 42 into a control command for actually commanding the air conditioner 2. The control command conversion circuitry 43 transmits the control command to the air conditioner 2.

Embodiment 1 illustrates the case where the airflow control performability determination circuitry 41 determines whether the airflow control can be started on the basis of the pattern data generation status, but the determination may be made on the basis of the generation status of analysis results in the airflow analysis circuitry 142.

The description has been made about the priority level setting method using the occurrence frequency of the operation state within the constant period, but the method is not limited to this method. Among the plurality of operation states, an operation state having a higher priority level may be selected by the user. An operation state having a higher priority level may be set randomly. For example, the operation state having a higher priority level may be preset at every regular interval among the operable ranges of the air conditioner 2.

An example of other priority level setting methods is described. For example, it is conceivable that a selectable range of the operation state of the air conditioner 2 is divided into a plurality of ranges in advance, a high priority level is assigned to one representative operation state in each divided range, and priority levels relatively lower than the priority level of the representative operation state are assigned to the other operation states. In this case, an optimum possible operation state can be determined at an early stage from the representative conditions, and the selectable range of the operation state can gradually be extended to other conditions.

An example of the selectable range of the operation state is described. Description is made about a case where the operation state is the vertical airflow direction of the air outlet of the indoor unit 22. A case is described where the gravity direction is an angle of 0°, the horizontal direction is an angle of 90°, the selectable range of the vertical airflow direction is an angle range of 0° to 90°, and the vertical airflow direction can be set in units of 1 degree. In this case, the selectable range of the operation state is divided into three sections. The three sections are a first section of 0° or more and less than 30°, a second section of 30° or more and less than 60°, and a third section of 60° or more and 90° or less.

In the first section, a high priority level is assigned to an angle of 15° as a representative value, and priority levels relatively lower than the priority level of the representative value are assigned to the other angles. In the second section, a high priority level is assigned to 45° as a representative value, and priority levels relatively lower than the priority level of the representative value are assigned to the other angles. In the third section, a high priority level is assigned to 75° as a representative value, and priority levels relatively lower than the priority level of the representative value are assigned to the other angles.

In this example, the airflow analysis circuitry 142 performs airflow analysis with priority for analysis conditions in which the angle of the vertical airflow direction is 15°, 45°, and 75°. Then, the airflow analysis circuitry 142 performs airflow analysis for analysis conditions in which the angle of the vertical airflow direction is angles other than 15°, 45°, and 75°. Airflow control can be started at the stage at which the airflow analysis is completed for the representative operation state in each divided range. The most efficient operation can be performed among the representative operation states. An example of hardware of the arithmetic device 14 of the air-conditioning control device 1 illustrated in FIG. 3 is described.

FIG. 24 is a hardware configuration diagram illustrating a configuration example of the arithmetic device 14 illustrated in FIG. 3. When various functions of the arithmetic device 14 are performed by hardware, the arithmetic device 14 illustrated in FIG. 3 is a processing circuit 81 as illustrated in FIG. 24. The processing circuit 81 implements the functions of the model creation circuitry 141, the airflow analysis circuitry 142, the pattern generation circuitry 143, and the airflow control circuitry 144 illustrated in FIG. 3.

When the functions are performed by hardware, the processing circuit 81 corresponds to, for example, a single circuit, a composite circuit, a programmed processor, a parallel programmed processor, an application-specific integrated circuit (ASIC), a field-programmable gate array (FPGA), or a combination of these foregoing. The processing circuit 81 may implement each of the functions of the model creation circuitry 141, the airflow analysis circuitry 142, the pattern generation circuitry 143, and the airflow control circuitry 144. One processing circuit 81 may implement the functions of the model creation circuitry 141, the airflow analysis circuitry 142, the pattern generation circuitry 143, and the airflow control circuitry 144.

FIG. 25 is a hardware configuration diagram illustrating another configuration example of the arithmetic device 14 illustrated in FIG. 3. Another hardware example of the arithmetic device 14 illustrated in FIG. 3 is described. When various functions of the arithmetic device 14 are performed by software, the arithmetic device 14 illustrated in FIG. 3 includes a processor 82 such as a central processing unit (CPU) and a memory 83 as illustrated in FIG. 25. The processor 82 and the memory 83 implement the functions of the model creation circuitry 141, the airflow analysis circuitry 142, the pattern generation circuitry 143, and the airflow control circuitry 144. FIG. 25 illustrates that the processor 82 and the memory 83 are connected to communicate with each other via a bus 84.

When the functions are performed by software, the functions of the model creation circuitry 141, the airflow analysis circuitry 142, the pattern generation circuitry 143, and the airflow control circuitry 144 are implemented by software, firmware, or a combination of software and firmware. The software and firmware are described as programs and stored in the memory 83. The processor 82 implements the functions of the pieces of circuitry by reading and executing the programs stored in the memory 83.

A non-volatile semiconductor memory such as a read only memory (ROM), a flash memory, an erasable and programmable ROM (EPROM), and an electrically erasable and programmable ROM (EEPROM) is used as the memory 83. A volatile semiconductor memory such as a random access memory (RAM) may be used as the memory 83.

A removable recording medium such as a magnetic disk, a flexible disk, an optical disc, a compact disc (CD), a mini disc (MD), and a digital versatile disc (DVD) may be used as the memory 83. Next, the operation of the air-conditioning control device 1 of Embodiment 1 is described.

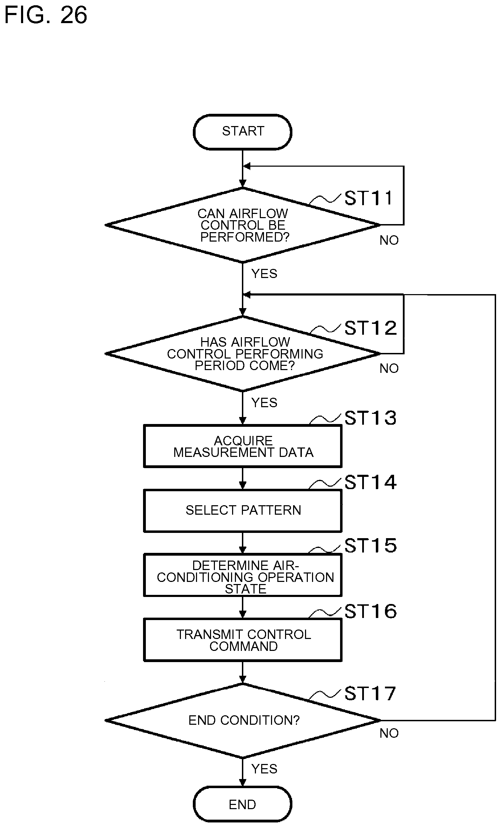

FIG. 26 is a flowchart illustrating an example of an operation procedure of the air-conditioning control device 1 according to Embodiment 1. The flow illustrated in FIG. 26 is triggered, for example, when the air-conditioning control device 1 receives an operation start notification signal showing the start of operation from the air conditioner 2. In this case, the controller 23 of the air conditioner 2 transmits the operation start notification signal to the air-conditioning control device 1 when the operation is started.

In Step ST11, the airflow control performability determination circuitry 41 determines whether the airflow control can be started. For example, the airflow control performability determination circuitry 41 determines whether the pattern data generation is completed by the pattern generation circuitry 143 from results of airflow analysis for analysis conditions having priority levels higher than a predetermined priority level.

When the result of the determination in Step ST11 shows that the pattern data generation is completed for the analysis conditions having high priority levels, the airflow control performability determination circuitry 41 determines that the airflow control can be started, and proceeds to Step ST12. When the result of the determination in Step ST11 shows that the pattern data generation is not completed for the analysis conditions having high priority levels, the airflow control performability determination circuitry 41 returns to Step ST11.

In Step ST12, the airflow control circuitry 144 determines whether the timing of an airflow control performing period has come. When the airflow control circuitry 144 determines that the timing of the airflow control performing period has come, the airflow control circuitry 144 proceeds to Step ST13. When the airflow control circuitry 144 determines that the timing of the airflow control performing period has not come, the airflow control circuitry 144 returns to Step ST12. The airflow control performing period is a constant period such as 5 minutes.

When the airflow control circuitry 144 proceeds to a process of Step ST13 to perform the airflow control, the airflow analysis circuitry 142 continues the airflow analysis also for the remaining analysis conditions in sequence from the analysis condition having a higher priority level. Through the airflow analysis in parallel to the airflow control, results of the airflow analysis for analysis conditions having relatively low priority levels are also accumulated in the storage device 13 with an elapse of time. The results of the airflow analysis for the analysis conditions having low priority levels can also be used at an early stage. Thus, the airflow control can be performed with higher accuracy.

In Step ST13, the airflow control circuitry 144 acquires the air-conditioning operation data 36 and the sensor data 37 from the storage device 13. The acquired data is not limited to current data acquired from the air conditioner 2 and the sensors 3 at the time closest to the current time. The data acquired from the storage device 13 may be past data including the air-conditioning operation data 36 and the sensor data 37 stored in the storage device 13 in the past.

In Step ST14, the airflow control circuitry 144 selects a pattern in which the state closest to a preset target value can be achieved from the pattern data generated by the pattern generation circuitry 143.

In Step ST15, the operation state determination circuitry 42 determines the operation state of the air conditioner 2 by referring to an outlet condition of the air conditioner 2 associated with the pattern selected in Step ST14.

In Step ST16, the control command conversion circuitry 43 converts the operation state determined in Step ST15 into a control command for actually commanding the air conditioner 2, and transmits the control command to the air conditioner 2.

In Step ST17, the airflow control circuitry 144 determines whether an end condition is satisfied. When the end condition is satisfied, the airflow control circuitry 144 ends the process. When the result of the determination in Step ST17 shows that the end condition is not satisfied, the airflow control circuitry 144 returns to Step ST12. The end condition is, for example, the stop of the air conditioner 2.

In this case, when an operation stop instruction for the air conditioner 2 is input by the user or operator, the controller 23 of the air conditioner 2 stops the operation of the air conditioner 2 and transmits a stop notification signal showing the stop of the operation of the air conditioner 2 to the air-conditioning control device 1. The end condition is not limited to the stop of the air conditioner 2, and may be a condition that a preset time has come from the start of the operation of the air conditioner 2. The preset time is the time when the operation of the air conditioner 2 comes into the stable state.

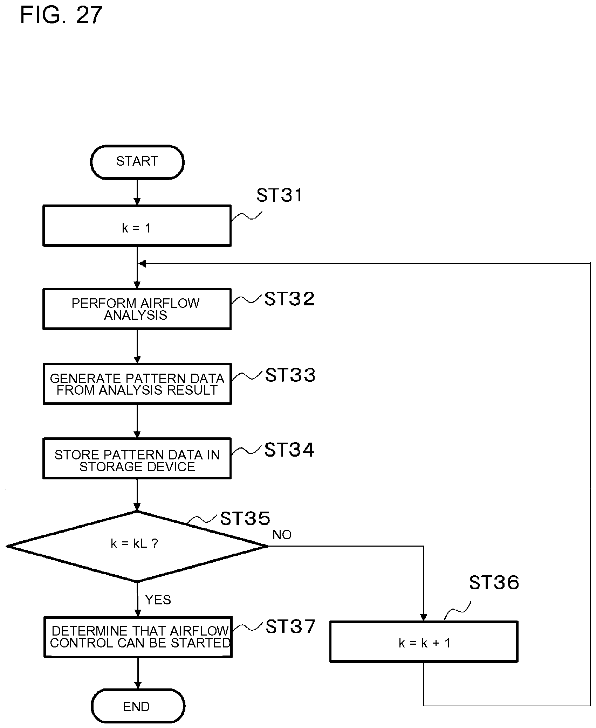

Next, the operations of the airflow analysis circuitry 142, the pattern generation circuitry 143, and the airflow control circuitry 144 in Step ST11 illustrated in FIG. 26 are described with reference to FIG. 27.

FIG. 27 is a flowchart illustrating an example of an operation procedure in Step ST11 illustrated in FIG. 26. The priority level assigned to the analysis condition is defined to be an integer k. Among a plurality of ranked priority levels k, the highest priority level is defined to be 1. The priority level "k = 1" corresponds to the upper limit priority level of the essential condition illustrated in FIG. 7. Among the plurality of ranked priority levels k, the lower limit priority level of the essential condition illustrated in FIG. 7 is defined to be kL.

When the highest priority level "1" is set as the priority level k of the analysis condition to be read (Step ST31), the airflow analysis circuitry 142 reads the analysis condition having the priority level "k = 1" from the storage device 13, and performs airflow analysis (Step ST32). Subsequently, the pattern generation circuitry 143 generates pattern data from the analysis result (Step ST33).

The pattern generation circuitry 143 stores the generated pattern data in the storage device 13 (Step ST34). The airflow control performability determination circuitry 41 determines whether the priority level k agrees with the lower limit priority level kL (Step ST35). When the result of the determination in Step ST35 shows that the priority level k does not agree with the lower limit priority level kL, the airflow control performability determination circuitry 41 sets a new priority level k to a value obtained by adding 1 to the current priority level k (Step ST36), and returns to Step ST32.

When the result of the determination in Step ST35 shows that the priority level k agrees with the lower limit priority level kL, the airflow control performability determination circuitry 41 determines that the airflow control can be performed (Step ST37). When two or more analysis conditions have the same priority level k, the airflow control circuitry 144 performs Steps ST32 to ST34 for each of the two or more analysis conditions, and then proceeds to Step ST35.

Through the airflow analysis for the high priority level with priority, the air-conditioning control can be started at an early stage at which the airflow analysis is completed for the analysis condition including the principal outlet condition. Next, the operation of the operation state determination circuitry 42 in Step ST15 illustrated in FIG. 26 is described.

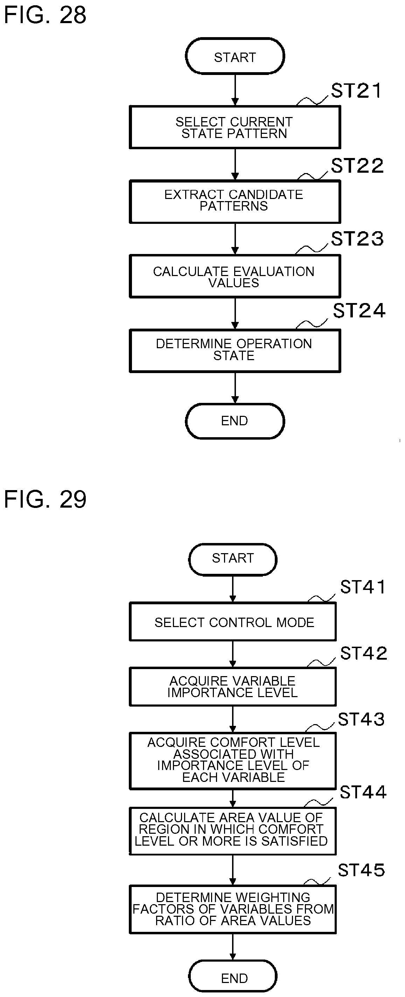

FIG. 28 is a flowchart illustrating an example of an operation procedure in Step ST15 illustrated in FIG. 26. A pattern selection process by the operation state determination circuitry 42 is described with reference to FIG. 28.

For convenience of the description, the following configuration and condition are described. The air conditioner 2 includes one indoor unit 22. The indoor unit 22 includes one air outlet. In the measurement data 136, the air-conditioning operation data 36 includes data on the on-off state of the air conditioner 2, an operation mode showing the cooling operation or the heating operation, a set temperature, an outlet airflow speed, a vertical airflow direction, and a lateral airflow direction. The sensors 3 are infrared sensors. The sensor data 37 includes data on a wall surface temperature, a ceiling surface temperature, and a floor surface temperature acquired from thermal imagery obtained by the infrared sensors.

In the analysis condition, the load condition includes the wall surface temperature, the ceiling surface temperature, and the floor surface temperature, and the outlet condition includes an outlet temperature at the one air outlet provided in the indoor unit 22, and a vertical airflow direction and a lateral airflow direction of airflow. Variables showing indoor environment, such as a temperature and an airflow speed, are calculated by the airflow analysis. As the target condition 135, an upper limit value and a lower limit value are set for each variable such as an airflow speed and a temperature on a plane at a predetermined height in a room that is the air-conditioning target space.

In Step ST21, the operation state determination circuitry 42 selects a current state pattern approximate to a current operation state as follows. The operation state determination circuitry 42 acquires the on-off state, the operation mode, the outlet airflow speed, the vertical airflow direction, and the lateral airflow direction of the air conditioner 2 from the air-conditioning operation data 36, and selects an outlet condition that agrees with the acquired operation state of the air conditioner 2 from among the outlet conditions in the analysis conditions.

Next, the operation state determination circuitry 42 acquires the wall surface temperature, the ceiling surface temperature, and the floor surface temperature from the sensor data 37, and subtracts the acquired floor surface temperature from the acquired ceiling surface temperature to obtain a vertical temperature difference between the ceiling surface temperature and the floor surface temperature. The operation state determination circuitry 42 obtains the vertical temperature difference by subtracting the floor temperature from the ceiling temperature also for the load condition in the analysis condition, and determines the closest load condition by comparing the vertical temperature difference and the wall temperature with the values acquired from the sensor data 37.

Pattern data associated with the analysis condition including the determined outlet condition and the determined load condition is uniquely determined. The operation state determination circuitry 42 sets the uniquely determined pattern data as the current state pattern serving as a current indoor environment estimation value.

In Step ST22, the operation state determination circuitry 42 extracts, in the following way, candidate patterns serving as candidates for the indoor environment estimation value when the outlet airflow speed, the vertical airflow direction, and the lateral airflow direction are changed from those in the current state pattern. The operation state determination circuitry 42 refers to the air-conditioning operation data 36 to select a plurality of outlet conditions in which the on-off state and the operation mode of the air conditioner 2 are the same and the outlet airflow speed, the vertical airflow direction, and the lateral airflow direction are different.

Subsequently, the operation state determination circuitry 42 extracts, from the analysis condition list 131, a plurality of analysis conditions including the same outlet condition as any one of the plurality of selected outlet conditions and the same load condition as the load condition determined in Step ST21. The operation state determination circuitry 42 sets a pattern associated with the extracted analysis condition as the candidate pattern. The number of candidate patterns may be one or plural.

In Step ST23, the operation state determination circuitry 42 calculates evaluation values for the current state pattern determined in Step ST21 and the candidate pattern determined in Step ST22. The evaluation value is calculated such that the proportion of a region included in upper and lower limit values of a preset range is calculated depending on each manipulation amount for each variable such as a temperature and an airflow speed in the pattern data and the proportions of the variables are multiplied by weighting factors determined in Steps ST41 to ST45 and added together.

The variable may include a function as well as the pattern data. In a case of a variable such as a power consumption, the power consumption is obtained by inputting each manipulation amount to a function that can determine the power consumption depending on the manipulation amount. The manipulation amount may be a plurality of parameters such as a set temperature and an airflow direction or may be one parameter. The number of parameters is not limited.

For example, the evaluation value calculation circuitry calculates the evaluation value by use of an evaluation function "evaluation value = $\alpha \cdot$pattern data g (temperature at 1.1 m above floor) + $\beta \cdot$function f (power consumption) + $\gamma \cdot$pattern data h (airflow speed at +1.1 m above floor)". The values $\alpha$, $\beta$, and $\gamma$ show weighting factors.

A specific example of the concept of calculation of the evaluation value by use of the pattern data is described. First, upper and lower limit values of an airflow speed and a temperature (upper and lower limit values at which persons can feel comfort) are 0 to 2 m/s for the airflow speed and 21 to 23 °C for the temperature, and indoor airflow speed distribution obtained from pattern data A of a certain manipulation amount is such that 0 to 1 m/s is 40%, 1 to 2 m/s is 30%, 2 to 3 m/s is 20%, 3 m/s or more is 10%.

Temperature distribution is such that 20 to 21 m/s is 40%, 21 to 22 m/s is 30%, 22 to 23 m/s is 20%, and 23 m/s or more is 10%. In this case, the airflow speed that falls within the upper and lower limit values "0 to 2 m/s" is 40 + 30 = 70% (0.7), and the temperature that falls within the upper and lower limit values "21 to 23 °C" is 30 + 20 = 50% (0.5). When the ratio of the weighting factors of the airflow speed and the temperature is 1:2, the evaluation value of the pattern data A is (0.7 × 1 + 0.5 × 2)/(1 + 2) = 0.566.

The analysis result of the airflow analysis or the pattern data may completely agree with the actual condition but may include a deviation. Therefore, the operation state determination circuitry 42 may correct the analysis result or the pattern data by use of the measured value of either or both of the air-conditioning operation data 36 and the sensor data 37, and use the corrected analysis result or the corrected pattern data. For example, a sensor 3 that measures an inlet temperature of sucked air is provided at the air inlet of the air conditioner 2, and the operation state determination circuitry 42 acquires information on a measured value from the sensor 3 provided at the air inlet.

The operation state determination circuitry 42 acquires information on a temperature corresponding to the inlet temperature from the analysis result or the pattern data, and corrects the analysis result or the pattern data by use of the difference between the temperature acquired from the analysis result or the pattern data and the measured value. Through the correction of the analysis result or the pattern data, the correction is reflected in the airflow control to be performed in the actual room, and the indoor temperature is corrected. Thus, the deviation caused by the difference between the analysis condition and the actual condition is corrected and the airflow control can be performed with high accuracy.

In Step ST24, the operation state determination circuitry 42 determines the operation state of the air conditioner 2 as follows. When all the evaluation values of the plurality of candidate patterns calculated in Step ST23 are each smaller than the evaluation value of the current state pattern, the operation state determination circuitry 42 does not change the operation state. When the evaluation value of any candidate pattern is higher than the evaluation value of the current state pattern, the operation state determination circuitry 42 determines the operation state of the air conditioner 2 that is associated with the outlet condition associated with the candidate pattern as a target value of the operation state of the air conditioner 2.

When the evaluation values of a plurality of candidate patterns are each higher than the evaluation value of the current state pattern, the operation state determination circuitry 42 selects a candidate pattern having the highest evaluation value, and determines the operation state of the air conditioner 2 that is associated with the outlet condition associated with the selected candidate pattern as the target value of the operation state of the air conditioner 2. The operation of the operation state determination circuitry 42 in Step ST23 illustrated in FIG. 28 is described with reference to FIG. 29.

FIG. 29 is a flowchart illustrating an example of an operation procedure in Step ST23 illustrated in FIG. 28. In Step ST41, the operation state determination circuitry 42 selects a control mode from the control mode list 137 on the basis of the sensor data 37 or data on, for example, a current time. In Step ST42, the operation state determination circuitry 42 acquires an importance level of each variable by use of the variable importance level table 138 on the basis of the control mode selected in Step ST41. In Step ST43, the operation state determination circuitry 42 acquires, on the basis of the comfort level table 139, a comfort level associated with the importance level of each variable acquired in Step ST42.

In Step ST44, the factor calculation circuitry 44 first acquires upper and lower limit values of the comfort level function 140 with which the acquired comfort level or more is satisfied on the basis of the comfort level associated with the importance level of each variable and acquired in Step ST43 and the comfort level function 140 for each variable. The factor calculation circuitry 44 calculates, in the comfort level function 140 for each variable, an area value of a region enclosed by a portion of the comfort level function 140 that has a comfort level equal to or higher than the acquired comfort level, the upper and lower limit values of the variable in this portion, and the X axis.

In Step ST45, weighting factors of the variables are determined by performing conversion to obtain larger weights serving as factors of the variables as the area values are smaller and calculating the ratio.

In this way, the air-conditioning control device 1 accumulates, as the pattern data, the results of the airflow analysis for the airflow analysis model 133 created on the basis of the device and space information 132 and the analysis condition list 131. The air-conditioning control device 1 performs the airflow control by selecting a pattern in which the target condition 135 is satisfied from the pattern data on the basis of the measurement data 136 when the air-conditioning control device 1 performs the airflow control.

The priority level is assigned to each analysis condition in the analysis condition list 131. The air-conditioning control device 1 performs the airflow analysis in sequence from a higher priority level. Thus, the airflow control can be started at an early stage at which the airflow analysis is completed for the condition having the high priority level. The air-conditioning control device 1 continues the airflow analysis for analysis conditions having low priority levels after the start of the airflow control, and various types of pattern data are gradually accumulated. Thus, the accuracy of the airflow control can be improved.

In Embodiment 1, the model creation circuitry 141 may perform machine learning by use of the measurement data 136 accumulated in the storage device 13 to update the airflow analysis model 133 such that the airflow analysis model 133 is adapted to the air-conditioning target space. Thus, the accuracy of the airflow analysis is further improved.

Embodiment 1 provides the air-conditioning control device 1 that gives a basis for comfort to the weighting factor of each evaluation item by clarifying the method for calculating the weighting factor of each evaluation item for use in the calculation of the evaluation value of the airflow analysis result and taking into consideration a correlation between each evaluation item and the user's comfort.

Therefore, when calculating the evaluation values of the plurality of evaluation items, the air-conditioning control device provided in the present invention can freely determine the priority level and the importance level of each evaluation item not on the basis of a fixed value but on the basis of the user's comfort, and can calculate the evaluation value from only the optimum possible evaluation function adapted to the state of the heating energy environment or the user's preferences. Thus, optimum possible analysis results with which the user always feels comfort can be acquired.

It has been conceived that, when the evaluation value of the airflow analysis result is calculated, a predetermined fixed value based on values under limited representative indoor and outdoor environments is used as the weighting factor of each variable in use. However, all the indoor and outdoor environments are different depending on air-conditioning target spaces. In particular, the user's comfort is significantly affected by the difference in the ease of heating or cooling of the space depending on the difference in the environment such as the shape of the air-conditioning target space and the heat storage performance of the building. Therefore, these differences are not taken into consideration for the evaluation of the analysis result by use of the weighting factor from the fixed value. Thus, there is a possibility that the user's comfort cannot be secured by the airflow control.

To reduce such a possibility, the air-conditioning control device 1 of Embodiment 1 determines the weighting factor of each variable from the basis for comfort in consideration of the fact that the user feels comfort variously depending on the difference in the indoor and outdoor environments of air-conditioning target spaces. Since the weighting factor from the basis for comfort is used in the evaluation of the airflow analysis result for each air-conditioning target space, the airflow control can be performed such that the comfort can be secured with higher accuracy for each air-conditioning target space.

According to Embodiment 1, the priority levels are assigned to the plurality of respective analysis conditions, and the airflow analysis is performed in sequence from the analysis condition having a higher priority level. Therefore, the airflow control can be started at an early stage at which the airflow analysis is completed for the analysis condition having the high priority level.

Since appropriate airflow control is performed at an early stage after the start of the activation of the air conditioner 2, a comfortable environment can be provided to the user at an early stage. Since the airflow control suited to the air-conditioning target space is performed at an earlier stage, the likelihood of an unnecessary change in the operation frequency of the compressor 51 is reduced and energy can be saved.

It has been conceived that, when the number of analysis conditions to be analyzed is large, the number of analysis conditions is reduced and the insufficient analysis conditions are complemented by an interpolation process or other process so that the period of the airflow analysis is reduced. Depending on how the analysis conditions are reduced, however, an analysis condition associated with an operation state having a high frequency of use may be deleted and the deleted analysis condition may be complemented by the interpolation process. In this case, the accuracy of the airflow analysis may decrease.

To reduce such a possibility, the air-conditioning control device 1 of Embodiment 1 performs the airflow analysis for the analysis condition having a higher priority level with priority among the plurality of analysis conditions instead of reducing the number of analysis conditions, and starts the airflow control on the basis of the analysis results. Since the airflow analysis is performed for the analysis condition having the high priority level, the likelihood of the decrease in the accuracy of the airflow analysis is reduced.

In Embodiment 1, after the start of the airflow control, the airflow analysis circuitry 142 performs the airflow analysis for analysis conditions having low priority levels in parallel to the airflow control. Therefore, many analysis results are accumulated in the storage device 13 with an elapse of time. Thus, the air-conditioning control device 1 can finely perform the airflow control with high accuracy for the user by use of the analysis results of many analysis conditions accumulated in the storage device 13.

In Embodiment 1, the storage device 13 stores and manages the pattern data showing the distribution of the environment of the air-conditioning target space instead of storing and managing the airflow analysis results as they are. Therefore, the data size of the analysis results can be reduced and the storage capacity of the storage device 13 can be reduced. The necessary storage capacity can be reduced even in the case of many analysis conditions.

As a result, according to Embodiment 1, the calculation load and the storage capacity can be reduced and the airflow control can be started at an early stage in consideration of the distribution of the heating energy environment of the air-conditioning target space.

The air-conditioning control device 1 of Embodiment 1 includes the storage device 13 that stores a plurality of analysis conditions having priority levels, results of the airflow analysis for each analysis condition, and a plurality of pieces of data for the determination of weighting factors to be used for evaluation values of the airflow analysis results, and the arithmetic device 14 that controls the air conditioner 2. The storage device 13 includes the pattern data 134 that shows the tendency of distribution of the environment of the air-conditioning target space from the airflow analysis results with less variables than the analysis results, the variable importance level table 138 that stores importance levels of the variables included in the pattern data 134, the comfort level table 139 that stores comfort levels associated with the importance levels of the variables, and the comfort level functions 140 and their graphs that show the correlations between the variables and the comfort levels.

The arithmetic device 14 includes the airflow analysis circuitry 142 that performs the airflow analysis in sequence from an analysis condition having a higher priority level among the plurality of analysis conditions, and the airflow control circuitry 144 including the airflow control performability determination circuitry 41 that determines whether the airflow control can be started for the air conditioner 2 on the basis of the generation status of airflow analysis results in the airflow analysis circuitry 142, and the factor calculation circuitry 44 that determines weighting factors of the variables to be used for calculation of evaluation values of the airflow analysis results for which the airflow control performability determination circuitry 41 has determined that the airflow control can be started. The airflow control circuitry 144 determines the operation state of the air conditioner 2 on the basis of the evaluation values of the airflow analysis results.

The present invention provides the air-conditioning control device 1 that gives a basis for comfort to the weighting factor of each evaluation item by clarifying the method for calculating the weighting factor of each evaluation item for use in the calculation of the evaluation value of the airflow analysis result and taking into consideration a correlation between each evaluation item and the user's comfort.

Therefore, when calculating the evaluation values of the plurality of evaluation items, the air-conditioning control device 1 provided in the present invention can freely determine the priority level and the importance level of each evaluation item not on the basis of a fixed value but on the basis of the user's comfort, and can calculate the evaluation value from only the optimum possible evaluation function adapted to the state of the heating energy environment and the user's preferences. Thus, optimum possible analysis results with which the user always feels comfort can be acquired.


Embodiment 2.

Next, an air-conditioning control device 1 of Embodiment 2 is described. In the air-conditioning control device 1 of Embodiment 1, the air conditioner 2 performs the airflow control in the air-conditioning target space. In the air-conditioning control device 1 of Embodiment 2, the air conditioner 2 performs the airflow control for the air-conditioning target space, and a ventilation device 5 performs ventilation amount control.

In Embodiment 2, both the distribution of the heating energy environment and distribution of air quality in the air-conditioning target space are taken into simultaneous consideration through the airflow control by the air conditioner 2 and the ventilation amount control by the ventilation device 5. Thus, in Embodiment 2, high-quality comfort can be provided to each air-conditioning target space and high-level and healthy air quality can be provided as well.

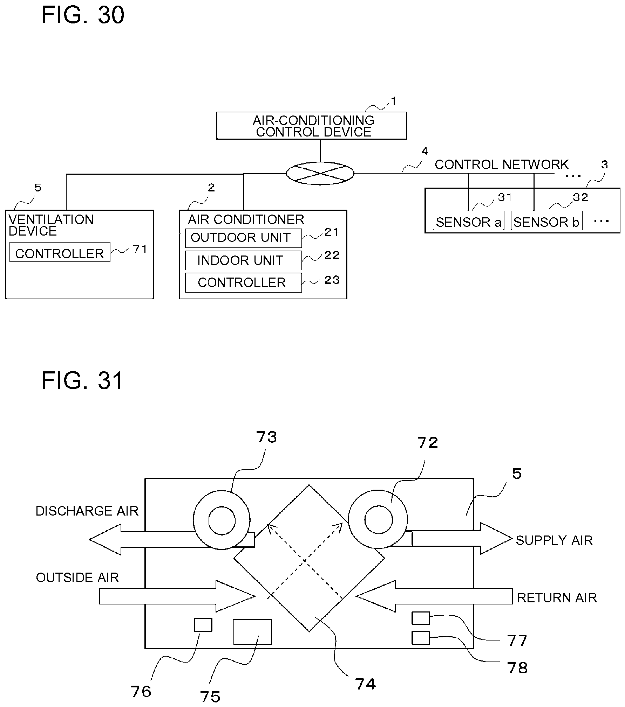

FIG. 30 is a configuration diagram illustrating an example of an air-conditioning system including the air-conditioning control device 1 according to Embodiment 2. In FIG. 30, devices represented by the same reference signs as those in FIG. 1 are the same or corresponding parts. As illustrated in FIG. 30, the air-conditioning control device 1 of the air-conditioning system of Embodiment 2 is connected to the air conditioner 2, the sensors 3, and the ventilation device 5 via the network 4, and the ventilation device 5 includes a controller 71.

The controller 71 is a device to be used by the user or operator to switch on and off the ventilation device 5 or manually change settings of a ventilation airflow volume or other variables. The controller 71 may be a remote controller.

FIG. 31 is a functional configuration diagram of the ventilation device 5 illustrated in FIG. 30. As illustrated in FIG. 31, the ventilation device 5 includes an air supply fan 72, an air discharge fan 73, a total enthalpy heat exchanger 74, a controller 75, an outdoor temperature sensor 76, an indoor temperature sensor 77, and an indoor humidity sensor 78. The left side of the ventilation device 5 is the outside of a building and the right side is the inside of a room. The indoor temperature sensor 77 and the indoor humidity sensor 78 may be an integrated temperature and humidity sensor. The outdoor temperature sensor 76, the indoor temperature sensor 77, and the indoor humidity sensor 78 may be included in the sensors 3.

The flow of air through the ventilation device 5 is described with reference to FIG. 31. In the ventilation device 5 having this structure, air outside the building enters the room through the total enthalpy heat exchanger 74. Hereinafter, the air that enters the ventilation device 5 from outside the building is referred to as "outside air", and the air that enters the room is referred to as "supply air". Indoor air is discharged to the outside of the building through the total enthalpy heat exchanger 74. Hereinafter, the air that enters the ventilation device 5 from the room is referred to as "return air", and the air discharged to the outside of the building is referred to as "discharge air".

In the total enthalpy heat exchanger 74, the outside air and the return air exchange heat and the supply air whose temperature and humidity are adjusted is supplied to the room. The outside air may directly enter the room without passing through the total enthalpy heat exchanger 74. In this case, although illustration is omitted in FIG. 31, a bypass passage is provided such that the outside air enters without passing through the total enthalpy heat exchanger 74. The passage through the total enthalpy heat exchanger 74 and the bypass passage are switched by a damper (not illustrated).

The air supply fan 72 causes air outside the building to enter the room. In this example, the air supply fan 72 is disposed on the indoor side from the total enthalpy heat exchanger 74. The air discharge fan 73 discharges indoor air to the outside of the building. In this example, the air discharge fan 73 is disposed on the outdoor side from the total enthalpy heat exchanger 74.

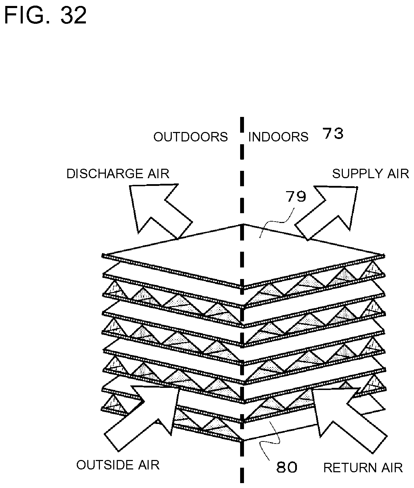

FIG. 32 is a diagram illustrating an example of the structure of the total enthalpy heat exchanger 74. The left side is the outside of the room and the right side is the inside of the room. Outside air from the outside of the room enters the total enthalpy heat exchanger 74 and is supplied to the room. Return air from the inside of the room enters the total enthalpy heat exchanger 74 and is discharged to the outside of the room. The total enthalpy heat exchanger 74 performs total enthalpy heat exchange between the outside air and the return air.

For example, the total enthalpy heat exchanger 74 has a square-pole shape as illustrated in FIG. 32. In the total enthalpy heat exchanger 74, partition plates 79, which are flat plates, and spacing plates 80, which are wavy components, are alternately stacked such that outside air passages are formed through which outside air flows to one of the adjacent sides and discharge air passages are formed through which discharge air flows to the other of the adjacent sides.

The flat plate and the wavy component are made of a material having moisture permeability (e.g., paper) so that moisture can move between the supply air and the discharge air. Thus, the total enthalpy heat exchanger 74 can exchange latent heat as well as sensible heat.

In the total enthalpy heat exchanger 74, the outside air to enter and the indoor air to be discharged are completely separated by the partition plates 79. The wavy portion of the spacing plate 80 serves as a bank to completely separate the supply air passage and the discharge air passage. With the wavy component used as the spacing plate 80, the strength of the total enthalpy heat exchanger 74 is maintained.

The temperature and humidity are exchanged between the supply air and the discharge air flowing along the front and back sides of the partition plate 79. For example, total enthalpy heat exchange paper with high heat exchange efficiency and excellent in moisture permeability is preferably used for the partition plate 79, and honeycomb corrugated paper is preferably used for the spacing plate 80.

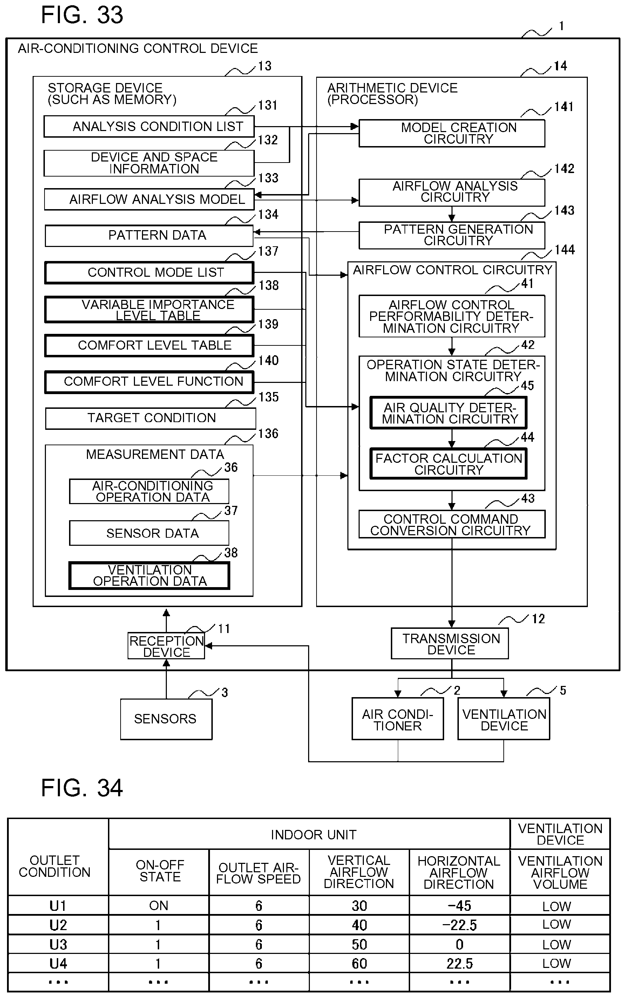

FIG. 33 is a block diagram illustrating a configuration example of the air-conditioning control device 1 according to Embodiment 2. In the air-conditioning control device 1 of Embodiment 2, the measurement data 136 includes ventilation operation data 38. In the air-conditioning control device 1 of Embodiment 2, the operation state determination circuitry 42 includes air quality determination circuitry 45.

Next, part of the configuration of the storage device 13 in Embodiment 2 that is different from that in Embodiment 1 is described. In Embodiment 2, the analysis condition list 131, the pattern data 134, the target condition 135, the measurement data 136, the variable importance level table 138, the comfort level table 139, and the comfort level function 140 are partially different from those in Embodiment 1.

In Embodiment 2, the analysis condition list 131 includes an outlet condition related to the operation state of the ventilation device 5 in addition to the outlet conditions related to the operation state of the air conditioner 2. The operation state that is a manipulation amount of the ventilation device 5 is, for example, a ventilation airflow volume. The ventilation airflow volume refers to a collective airflow volume including the airflow volume of supply air and the airflow volume of discharge air. When the airflow volume of supply air and the airflow volume of discharge air are different values, the term "ventilation airflow volume" may be replaced with terms "supply airflow volume" and "discharge airflow volume".

FIG. 34 is a conceptual diagram illustrating an example of the outlet conditions related to the operation states of the air conditioner 2 and the ventilation device 5 among the analysis conditions. The ventilation airflow volume stored in FIG. 34 may be stored with the supply airflow volume and the discharge airflow volume distinguished from each other, or may be stored as outputs from the air supply fan 72 and the air discharge fan 73. An identifier may be included to show whether to exchange heat between outside air and return air by use of the total enthalpy heat exchanger 74. An identifier may be included to show that outside air enters via the bypass passage instead of the passage through the total enthalpy heat exchanger 74.

Since the analysis condition list 131 includes the outlet conditions of the ventilation device 5 and the air conditioner 2 illustrated in FIG. 34 in Embodiment 2, an analysis condition for control on the operation states of both the air conditioner 2 and the ventilation device 5 can be set.

In Embodiment 2, the pattern data 134 includes at least one air quality-related variable in the air-conditioning target space in addition to the variables described in Embodiment 1. Examples of the air quality-related variable include a $CO_2$ concentration, air age, ventilation efficiency, a ventilation count, a ventilation amount, other indices showing a relative ventilation amount to a necessary ventilation amount serving as a reference, and concentrations of other contaminants.

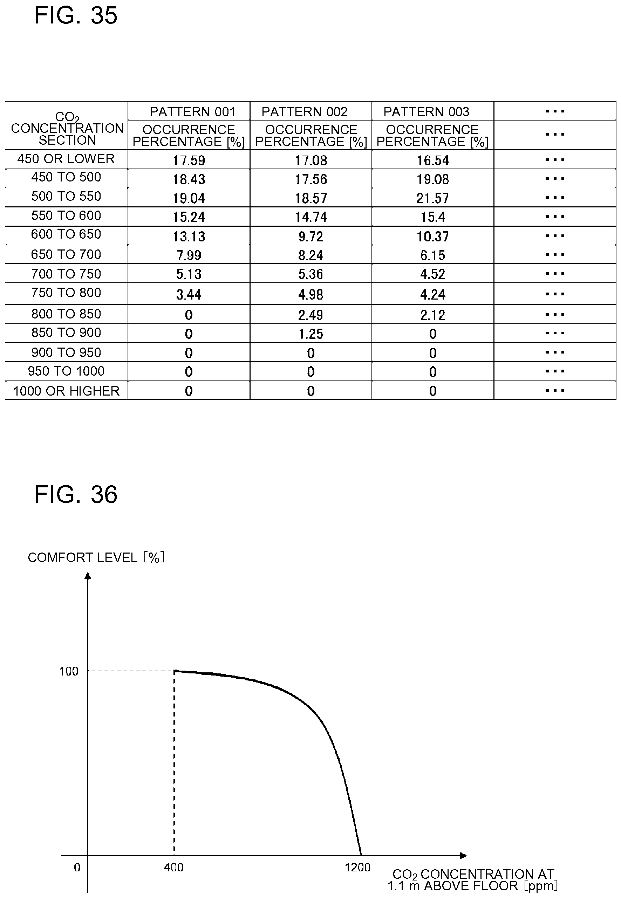

FIG. 35 is a conceptual diagram illustrating an example of the pattern data illustrated in FIG. 33, and is an example of a case where the $CO_2$ concentration is used as the air quality-related variable. In Embodiment 2, the pattern data 134 includes at least one air quality-related variable, and therefore the variable importance level table 138 also includes the same air quality-related variable. Thus, in Embodiment 2, the comfort level table 139 includes a comfort level associated with the importance level of the at least one air quality-related variable that is included in the variable importance level table 138.

Thus, in Embodiment 2, the comfort level function 140 includes a correlation function of the air quality-related variable included in the pattern data 134 and the user's comfort level and its graph. A conceptual diagram is provided to illustrate an example of the comfort level function 140 illustrated in FIG. 33.

FIG. 36 is an example of the comfort level function 140 with the horizontal axis representing the $CO_2$ concentration as the air quality-related variable. In Embodiment 2, the target condition 135 includes, in addition to the setting condition described in Embodiment 1, upper and lower limit values of a permissible range to be satisfied by the at least one air quality-related variable in the air-conditioning target space.

In Embodiment 2, the measurement data 136 includes the ventilation operation data 38 in addition to the air-conditioning operation data 36 and the sensor data 37 described in Embodiment 1. The ventilation operation data 38 is information on the operation state such as a set airflow volume.

Next, part of the configuration of the arithmetic device 14 in Embodiment 2 that is different from that in Embodiment 1 is described. In Embodiment 2, the operation state determination circuitry 42 includes the air quality determination circuitry 45.

The air quality determination circuitry 45 determines, for all the pattern data for which the airflow control performability determination circuitry 41 has determined that the airflow control can be started, whether a representative value of the air quality-related variable included in the pattern data satisfies the upper and lower limit values of the permissible range set in the target condition 135. The air quality determination circuitry 45 extracts the pattern data in which the air quality-related variable falls within the permissible range as a candidate pattern that is a candidate for the pattern data.

The air quality determination circuitry 45 determines whether the air quality-related variable identified from the pattern data satisfies a target value, and extracts the pattern data in which the air quality-related variable falls within the permissible range as the candidate pattern for calculation of the evaluation value.

The representative value of the air quality-related variable included in the pattern data is set, for example, by a method using a mean value of the variable in a small region with the highest occurrence percentage in the pattern data. In the case of the method using a mean value, in an example of pattern data "pattern 001" illustrated in FIG. 35 in which the $CO_2$ concentration is used as the air quality-related variable, the occurrence percentage is highest in a $CO_2$ concentration section "500 to 550", and the representative value of the $CO_2$ concentration in "pattern 001" is 525 ppm, which is a mean value between 500 and 550.

The representative value of the air quality-related variable included in the pattern data may be set by a method of calculating an average value weighted by the occurrence percentage in the pattern data by obtaining the product of a decimal representing the occurrence percentage and the value in the section of the variable, by a method using a maximum possible value, or any other method. For example, a representative value "549.7 ppm" can be obtained by use of a median value of the concentration section of the $CO_2$ concentration when an average value weighted by the occurrence percentage in the concentration section is calculated in the pattern data "pattern 001" illustrated in FIG. 35.

Next, the operation of the air-conditioning control device 1 of Embodiment 2 is described. The air-conditioning control device 1 of Embodiment 2 performs processes different from those of Steps ST21 to ST24 that are details of the process of Tep ST15 in Embodiment 1, but performs processes similar to those in Embodiment 1 for the other operations. Therefore, the following description is directed to a flow corresponding to Steps ST21 to ST24 that are details of the process of Step ST15 in Embodiment 1 in the operation of the air-conditioning control device 1 according to Embodiment 2.

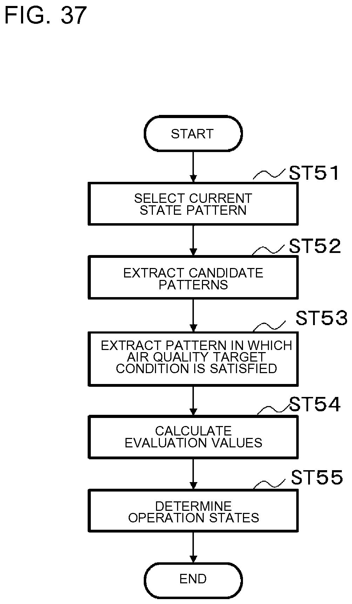

FIG. 37 is a flowchart illustrating an example of an operation procedure in Step ST15 illustrated in FIG. 26 in Embodiment 2. A pattern selection process by the operation state determination circuitry 42 according to Embodiment 2 is described with reference to FIG. 37.

In Step ST51, the operation state determination circuitry 42 selects a current state pattern approximate to current operation states of the air conditioner 2 and the ventilation device 5 as follows. The operation state determination circuitry 42 acquires the air-conditioning operation data 36 including the on-off state, the operation mode, the outlet airflow speed, the vertical airflow direction, and the lateral airflow direction of the air conditioner 2 and the ventilation operation data 38 including the on-off state and the ventilation airflow volume of the ventilation device 5, and selects an outlet condition that agrees with the acquired operation states of the air conditioner 2 and the ventilation device 5 from among the outlet conditions in the analysis condition list 131.

Next, the operation state determination circuitry 42 acquires the wall surface temperature, the ceiling surface temperature, and the floor surface temperature from the sensor data 37, and subtracts the acquired floor surface temperature from the acquired ceiling surface temperature to obtain a vertical temperature difference between the ceiling surface temperature and the floor surface temperature.

The operation state determination circuitry 42 obtains the vertical temperature difference by subtracting the floor temperature from the ceiling temperature also for the load condition in the analysis condition, and determines the closest load condition by comparing the vertical temperature difference and the wall temperature with the values acquired from the sensor data 37. Pattern data associated with the analysis condition including the determined outlet condition and the determined load condition is uniquely determined. The operation state determination circuitry 42 sets the uniquely determined pattern data as the current state pattern serving as a current indoor environment estimation value.

In Step ST52, the operation state determination circuitry 42 extracts, in the following way, candidate patterns serving as candidates for the indoor environment estimation value when the outlet airflow speed, the vertical airflow direction, and the lateral airflow direction of the air conditioner 2 and the ventilation airflow volume of the ventilation device 5 are changed from those in the current state pattern.

First, the operation state determination circuitry 42 refers to the air-conditioning operation data 36 to select a plurality of outlet conditions in which the on-off state and the operation mode of the air conditioner 2 are the same and the outlet airflow speed, the vertical airflow direction, and the lateral airflow direction are different. Next, the operation state determination circuitry 42 refers to the ventilation operation data 38 to select a plurality of outlet conditions in which the on-off state of the ventilation device 5 is the same and the ventilation airflow volume is different.

Subsequently, the operation state determination circuitry 42 extracts, from the analysis condition list 131, a plurality of analysis conditions including the same outlet condition as any one of the plurality of selected outlet conditions and the same load condition as the load condition determined in Step ST51. The operation state determination circuitry 42 extracts a pattern associated with the extracted analysis condition, and outputs the pattern to the air quality determination circuitry 45.

In Step ST53, the air quality determination circuitry 45 determines, for each pattern extracted by the operation state determination circuitry 42 in Step ST52, whether the representative value of the air quality-related variable included in the pattern data falls within the permissible range set in the target condition 135. The air quality determination circuitry 45 sets, as the candidate pattern, a pattern for which determination is made that the representative value of the air quality-related variable falls within the range. The number of candidate patterns may be one or plural.

In Step ST54, the operation state determination circuitry 42 calculates evaluation values for the current state pattern determined in Step ST51 and the candidate pattern determined in Step ST53. The evaluation value is calculated such that the proportion of a region included in a preset target value range is calculated separately for a variable such as a temperature and an airflow speed and at least one air quality-related variable in the pattern data and the proportions of the variables are multiplied by weighting factors and added together.

In Step ST55, the operation state determination circuitry 42 determines the operation states of the air conditioner 2 and the ventilation device 5 as follows. When all the evaluation values of the plurality of candidate patterns calculated in Step ST54 are each smaller than the evaluation value of the current state pattern, the operation state determination circuitry 42 does not change the operation states.

When the evaluation value of any candidate pattern is higher than the evaluation value of the current state pattern, the operation state determination circuitry 42 determines the operation states of the air conditioner 2 and the ventilation device 5 that are associated with the outlet condition associated with the candidate pattern as target values of the operation states of the air conditioner 2 and the ventilation device 5.

When the evaluation values of a plurality of candidate patterns are each higher than the evaluation value of the current state pattern, the operation state determination circuitry 42 selects a candidate pattern having the highest evaluation value, and determines the operation states of the air conditioner 2 and the ventilation device 5 that are associated with the outlet condition associated with the selected candidate pattern as the target values of the operation states of the air conditioner 2 and the ventilation device 5.

As described above, in the air-conditioning control device 1 of Embodiment 2, the measurement data 136 includes the ventilation operation data 38 that is the information on the operation state of the ventilation device 5, and the operation state determination circuitry 42 includes the air quality determination circuitry 45 that makes determination on the representative value of the air quality-related variable included in the pattern data.

Therefore, the air-conditioning control device 1 of Embodiment 2 can improve the comfort in the air-conditioning target space and secure healthy air quality with high accuracy, and can provide the user with an air-conditioned space with higher value than in Embodiment 1.

Embodiment 3.

Next, an air-conditioning control device 1 of Embodiment 3 is described. **In** the air-conditioning control device 1 of Embodiment 2, the air conditioner 2 performs the airflow control and the ventilation device 5 performs the ventilation amount control simultaneously for the air-conditioning target space. In the air-conditioning control device 1 of Embodiment 3, the comfort level functions 140 for use in the evaluation of the pattern data for the determination of the operation states of the air conditioner 2 and the ventilation device 5 are continuously and automatically improved on the basis of feedback such as histories of operations of the indoor unit 22 and the ventilation device 5 by a plurality of users in the air-conditioning target space.

Therefore, in Embodiment 3, weighting factors unique to each air-conditioning target space can be determined without the need for the user's work to update the variable importance level table 138 and the comfort level table 139 in Embodiments 1 and 2. Thus, in Embodiment 3, the comfort in the air-conditioning target space can be improved and healthy air quality can be secured continuously with high accuracy while being maximally adapted to the characteristics of the air-conditioning target space and the user's preferences to the extent possible. Thus, the user can be provided with an air-conditioned space with higher value than in Embodiment 2.

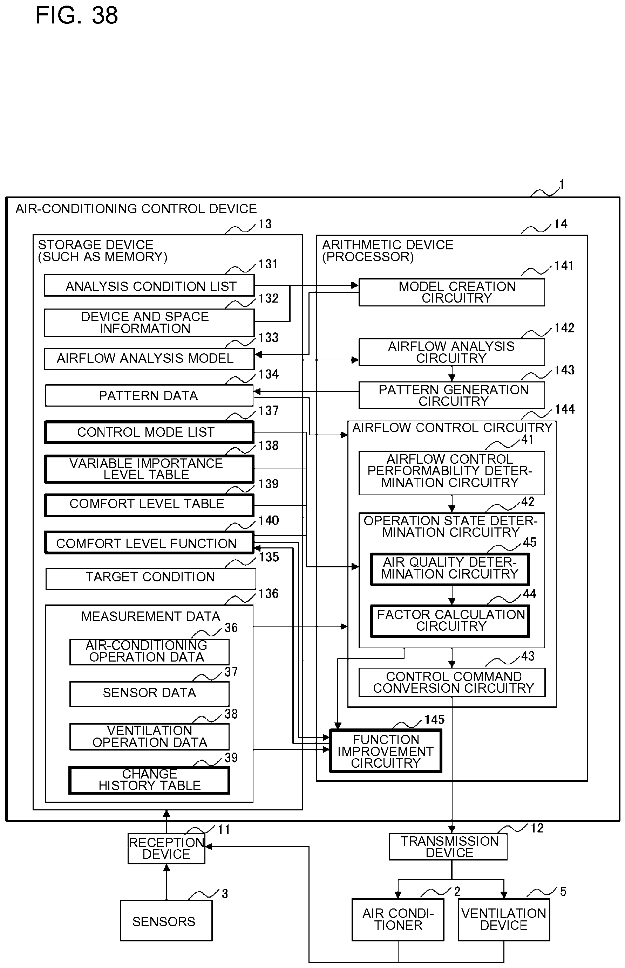

FIG. 38 is a block diagram illustrating a configuration example of the air-conditioning control device 1 according to Embodiment 3. In FIG. 38, devices represented by the same reference signs as those in FIG. 33 are the same or corresponding parts. As illustrated in FIG. 38, in the air-conditioning control device 1 of the air-conditioning system of Embodiment 3, the measurement data 136 includes a change history table 39, and the arithmetic device 14 includes function improvement circuitry 145.

The change history table 39 stores, for example, a history of changes in set values such as the set temperature, the airflow volume, and the airflow direction of the indoor unit 22 that are input by a plurality of users in the air-conditioning target space via the controller 23 of the air conditioner 2, and a history of changes in set values such as the ventilation airflow volume of the ventilation device 5 that are input via the controller 71 of the ventilation device 5.

The change history table 39 acquires the histories of changes in the set values made by the users from the reception device 11 at predetermined time intervals, and stores dates and times of the changes made by the users, changed set values, and current set values.

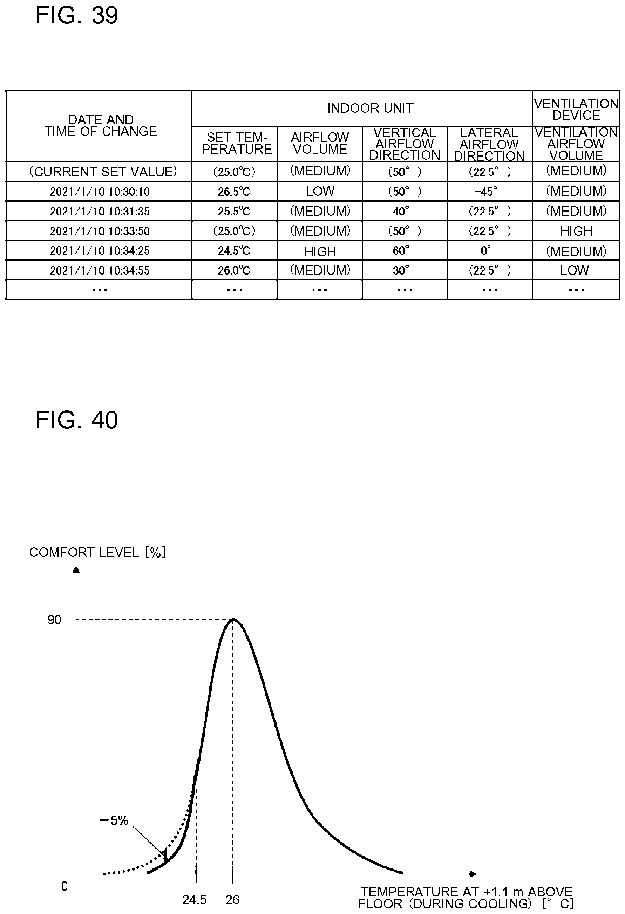

FIG. 39 is an example of the change history table 39 illustrated in FIG. 38. For convenience of the description, the following configuration and condition are described. The air conditioner 2 includes one indoor unit 22. The indoor unit 22 includes one air outlet. One ventilation device 5 is provided. The change history table 39 includes at least dates and times of changes in the set values of the indoor unit 22 and the ventilation device 5, changed set values, and current set values.

The change history table 39 stores histories of changes in the set values to be overwritten at predetermined time intervals. For example, the predetermined time interval is 5 minutes when a short-term change history is stored, and is 6 months that is a period after which cooling and heating are switched when a long-term change history is stored. The predetermined time interval may be set to a predefined value or may be changed by any user in the air-conditioning target space or other spaces.

In the example of the change history table 39 illustrated in FIG. 39, histories of changes in set values of the indoor unit 22 input by the users via the controller 23 of the air conditioner 2 and set values of the ventilation device 5 input via the controller 71 of the ventilation device 5 are stored in ascending order of time regarding the operation states including the set temperature, the airflow volume, the vertical airflow direction, and the lateral airflow direction of the indoor unit 22 and the ventilation airflow volume of the ventilation device 5. The value with a parenthesis symbol "()" shows that the user has not made a change, and shows the latest set value of the indoor unit 22 or the ventilation device 5.

In Embodiment 3, the operation state determination circuitry 42 outputs the determined operation states of the air conditioner 2 and the ventilation device 5 to the control command conversion circuitry 43, and stores each of the operation states of the air conditioner 2 and the ventilation device 5 in the corresponding one of the air-conditioning operation data 36 and the ventilation operation data 38 as the latest operation states of the air conditioner 2 and the ventilation device 5. The operation state determination circuitry 42 outputs pattern data having the highest evaluation value to the function improvement circuitry 145 described next.

The function improvement circuitry 145 improves the correlation functions between the variables and the comfort and their graphs stored in the comfort level functions 140 on the basis of the change history table 39, current set values of the air conditioner 2 and the ventilation device 5 stored in the air-conditioning operation data 36 and the ventilation operation data 38, and the pattern data having the highest evaluation value and output from the operation state determination circuitry 42. The function improvement circuitry 145 overwrites the comfort level functions 140 with the improved comfort level functions 140 as new comfort level functions 140 and stores them in the storage device 13.

A specific method for improving the comfort level functions 140 by the function improvement circuitry 145 is described below. First, the function improvement circuitry 145 acquires, at predetermined time intervals, histories of changes in the set values such as a set temperature and an airflow volume of the indoor unit 22 and the ventilation device 5 stored in the change history table 39, and calculates representative set values within a constant period for each set value. The predetermined time interval is, for example, 5 minutes.

The representative set value among the set values within the constant period is a known index obtained by a statistical calculation method such as an average value and a median value. When an average value is used as the representative set value among the set values within the constant period, the representative set value among the set values within the constant period is $(26.5 + 25.5 + 25.0 + 24.5 + 26.0)/5 = 25.5$ regarding the set temperature in the example of the change history table 39 illustrated in FIG. 39.

Regarding operation data in which the representative set value cannot directly be calculated because of a text set value such as an airflow volume and a ventilation airflow volume, the function improvement circuitry 145 checks the text set value stored in the air-conditioning operation data 36 or the ventilation operation data 38 against the airflow volume value, and converts the text set value into the airflow volume value, thereby calculating the representative set value.

Next, the function improvement circuitry 145 acquires current set values of the air conditioner 2 and the ventilation device 5 stored in the air-conditioning operation data 36 and the ventilation operation data 38. In the example illustrated in FIG. 39, the current set temperature is 25.0 °C.

Next, the function improvement circuitry 145 compares the representative set values among the set values within the constant period with the acquired current set values, and acquires their magnitude relationships. The function improvement circuitry 145 improves each of the comfort level functions 140 to increase or reduce a comfort level at a set value equal to or higher than a reference value or equal to or lower than the reference value on the comfort level function 140 with the reference value being the current set value.

In the example illustrated in FIG. 39, the obtained result shows that the user feels more comfort at the representative set value "25.5 °C" than the current set temperature "25.0 °C" (the user sets the temperature to obtain comfort). Therefore, the result suggests that the user in the air-conditioning target space tends to feel comfort at a temperature higher than the set temperature. At this time, the function improvement circuitry 145 improves the comfort level function 140 for "temperature at 1.1 m above floor" during cooling to reduce, by a constant value, a comfort level at a temperature equal to or lower than the current set temperature "25.0 °C" serving as a reference. The constant value is, for example, 5%.

It is known that the representative set value (25.5 °C) is most comfortable. The current set temperature is 25.0 °C at the time. The "change from 25.0 °C to 25.5 °C" during cooling means that "the user feels cold at 25.0 °C."

In this tendency, the user is likely to feel cold at temperatures lower than 25.0 °C similarly to 25.0 °C. Therefore, the temperature at which the comfort level is to be reduced may be "25 °C or less" by combining 25.0 °C and the temperatures lower than 25.0 °C.

Which of a high temperature and a low temperature compared with the current set value serving as the reference to reduce the comfort level is determined by the function improvement circuitry 145 on the basis of the magnitude relationship between the representative set value among the set values within the constant period and the current set value.

In the above example, the representative set value (25.5 °C) among the set values within the constant period is higher than the current set value (25.0 °C) during cooling, and the user feels comfort at a higher temperature. For the reasons, the comfort level is reduced by the constant value for the temperatures lower than the current set value. When the representative set value among the set values within the constant period is, for example, 24.5 °C during cooling, the representative set value (24.5 °C) among the set values within the constant period is lower than the current set value (25.0 °C) and, the user feels comfort at a lower temperature. For the reasons, the comfort level is reduced by the constant value for temperatures higher than the current set value.

The amount of reduction in the comfort level is determined, for example, by a method, for example, in which a corresponding reduction amount is determined in advance depending on the difference between the current set value and the representative set value among the set values. For example, the reduction amount is determined as 10% when the difference is 1 °C or more, and as 5% when the difference is less than 1 °C. In the above example, the difference between 25.0 °C and 25.5 °C is 0.5 °C, and therefore the amount of reduction in the comfort level is 5%.

FIG. 40 is an example of the comfort level function 140 improved by the function improvement circuitry 145 illustrated in FIG. 38. FIG. 40 is a diagram illustrating an example of the changed comfort level function 140 for "temperature at 1.1 m above floor" during cooling when the function improvement circuitry 145 changes the comfort level function 140 for "temperature at 1.1 m above floor" during cooling as in the above example.

For example, when the current set temperature "25.0 °C" is set to the reference value and the comfort levels at temperatures each equal to or lower than the reference value are reduced as illustrated in FIG. 40, all the values of the comfort level at temperatures each equal to or lower than 24.5 °C are reduced by 5% on the comfort level function 140 for "temperature at 1.1 m above floor" as illustrated in FIG. 40.

Through the above process, the comfort levels at "temperatures at 1.1 m above floor" higher than 24.5 °C are relatively higher than the comfort levels at temperatures each equal to or lower than 24.5 °C. Through the improvement in the comfort level function 140 on the basis of the average value of the changed set values, the comfort level function 140 unique to the air-conditioning target space in which the set values are changed can be created.

Lastly, after the improvement in the comfort level functions 140 is completed, the function improvement circuitry 145 updates the improved comfort level functions 140 as new comfort level functions 140 and stores them in the storage device 13.

The above example illustrates the method in which the function improvement circuitry 145 improves the comfort level function 140 for "temperature at 1.1 m above floor" during the cooling. The comfort level functions 140 for the other variables are improved by similar methods. For example, in the case of "airflow speed at 1.1 m above floor", the function improvement circuitry 145 checks the text set value stored in each of the air-conditioning operation data 36 and the ventilation operation data 38 against the airflow volume value, compares the current set value with an average value of changed set values, and improves the comfort level function 140 for "airflow speed at 1.1 m above floor" to increase or reduce a comfort level at an airflow speed equal to or higher than a reference value or equal to or lower than the reference value with the reference value being the current set value of "airflow speed at 1.1 m above floor" in the lastly output pattern data. Through the above process, the function improvement circuitry 145 can improve the comfort level functions 140 for the other variables. Next, the operation of the air-conditioning control device 1 of Embodiment 3 is described.

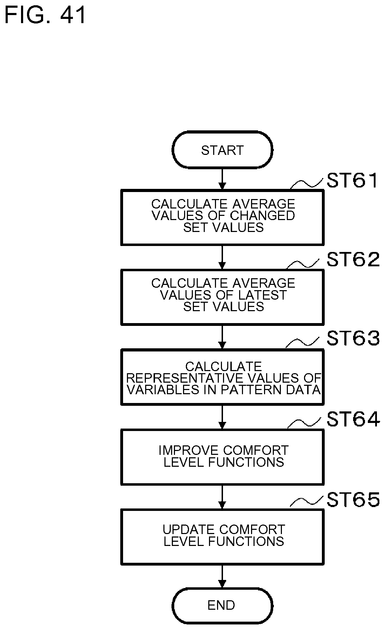

FIG. 41 is a flowchart illustrating an example of an operation procedure of the function improvement circuitry 145 according to Embodiment 3. The process for improving the comfort level functions 140 by the function improvement circuitry 145 according to Embodiment 3 is described with reference to FIG. 41. In Embodiment 3, the operation that is not related to the function improvement circuitry 145 is performed by a process similar to that in Embodiment 2.

The flow illustrated in FIG. 41 is triggered, for example, when the air-conditioning control device 1 receives, from the controller 23 of the air conditioner 2 or the controller 71 of the ventilation device 5, a signal showing that the set value such as the set temperature, the airflow volume, and the airflow direction of the indoor unit 22 is changed or a signal showing that the set value such as the ventilation airflow volume of the ventilation device 5 is changed.

In Step ST61, the function improvement circuitry 145 acquires, at predetermined time intervals, histories of changes in the set values of the indoor unit 22 and the ventilation device 5 stored in the change history table 39, and calculates average values that are the representative set values for the individual set values such as the set temperature and the airflow volume.

In Step ST62, the function improvement circuitry 145 acquires current set values of the air conditioner 2 and the ventilation device 5 stored in the air-conditioning operation data 36 and the ventilation operation data 38.

In Step ST63, the function improvement circuitry 145 calculates the representative set values of the variables by referring to pattern data lastly output by the operation state determination circuitry 42.

In Step ST64, the function improvement circuitry 145 compares each average value of the changed set values calculated in Step ST61 with the corresponding one of the current set values acquired in Step ST62. On the basis of the comparison result, the function improvement circuitry 145 improves each comfort level function 140 to increase or reduce a comfort level equal to or higher than a reference value or equal to or lower than the reference value on the comfort level function 140 with the reference value being the comfort level of the current set value of the variable in the lastly output pattern data calculated in Step ST63.

In Step ST65, after the improvement in the comfort level functions 140, the function improvement circuitry 145 updates the improved comfort level functions 140 as new comfort level functions 140 and stores them in the storage device 13.

In the above description, the reduction amount corresponding to the difference is defined in advance as the correction value. The method for obtaining the correction value is not limited to this method. For example, the correction value may be obtained by obtaining a discomfort index. A method for determining the correction value by the discomfort index is also described.

For example, "metabolic rate, work load, clothing amount, temperature, airflow speed, and humidity" are set as input values of environment, and a discomfort index is calculated as an index showing the percentage of persons who feel discomfort about the input values. For example, the discomfort index is calculated when the input values are such that the metabolic rate is 1.1 met (64.02 W/m^2), the mechanical work load is 0.0 W/m^2, the clothing amount is 0.3 cloi (basic thermal resistance of clothing), the average airflow speed is 0.1 m/s, the relative humidity is 60.0%, and the current set value is 25.0 °C. In this case, the discomfort index is 10.4931 when the room temperature is 25.0 °C. That is, 10.5% of persons feel discomfort.

When the representative set value among the set values is 25.5 °C, the discomfort index is calculated similarly. When the room temperature is 25.5 °C, the discomfort index is 7.13173. This means that 7.1% of persons feel discomfort. The discomfort index is smaller when the room temperature is 25.5 °C. Therefore, it is understood that many persons feel more comfort at 25.5 °C than 25.0 °C.

Therefore, the representative set value among the set values (= correct answer) is set to 25.5 °C. The discomfort index "7.1%" at the room temperature "25.5 °C" is corrected to "0% (= no one feels discomfort)". That is, the correction amount at this time is "-7.1%". In this case, in the method for improving the comfort level function 140 by a reduction amount X = 7.1% for the comfort level function 140 (reduction by 7.1%), the value of the comfort level at the current set value or less (or more) is corrected by the correction amount based on the discomfort index obtained by setting the representative value among the set values as a correct answer value under the concept that the current set value or less (or more: depending on magnitude relationship) is clearly uncomfortable.

As described above, in the process of Embodiment 3, the comfort level functions 140 for use in the evaluation of the pattern data for the determination of the operation state of the air conditioner 2 that performs the airflow control and the operation state of the ventilation device 5 that performs the ventilation amount control in Embodiment 2 are continuously improved on the basis of the operation histories of a plurality of users.

Thus, the comfort in the air-conditioning target space can be improved and healthy air quality can be secured while being maximally adapted to the characteristics of the air-conditioning target space and the user's preferences to the extent possible. Thus, the user can be provided with an air-conditioned space with higher accuracy and with higher value than in Embodiment 2.

In Embodiment 3, the comfort level functions 140 are improved on the basis of feedback from the user's operation histories. Thus, ideal weighting factors of the variables in each air-conditioning target space can automatically be optimized to the extent possible without the need for the user's time and effort to change the comfort level table 139.

List of Reference Signs

| 1: | air-conditioning control device |
|---|---|
| 2: | air conditioner |
| 3, 31 to 3n: | sensor |
| 4: | network |
| 5: | ventilation device |
| 11: | reception device |
| 12: | transmission device |
| 13: | storage device |
| 14: | arithmetic device |
| 21: | outdoor unit |
| 22: | indoor unit |
| 23: | controller |
| 36: | air-conditioning operation data |
| 37: | sensor data |
| 38: | ventilation operation data |
| 39: | change history table |
| 41: | airflow control performability determination circuitry |
| 42: | operation state determination circuitry |
| 43: | control command conversion circuitry |
| 44: | factor calculation circuitry |
| 45: | air quality determination circuitry |
| 50: | refrigerant circuit |
| 51: | compressor |
| 52: | four-way valve |
| 53: | heat source-side heat exchanger |
| 54: | expansion device |
| 55: | load-side heat exchanger |
| 57: | outdoor fan |
| 58: | indoor fan |
| 59: | airflow direction adjustment unit |
| 61: | lateral flap |
| 62: | vertical flap |
| 71: | controller |
| 72: | air supply fan |
| 73: | air discharge fan |
| 74: | total enthalpy heat exchanger |
| 75: | controller |
| 76: | outdoor temperature sensor |
| 77: | indoor temperature sensor |
| 78: | indoor humidity sensor |
| 79: | partition plate |
| 80: | spacing plate |
| 81: | processing circuit |
| 82: | processor |
| 83: | memory |
| 84: | bus |
| 131: | analysis condition list |
| 132: | device and space information |
| 133: | airflow analysis model |
| 134: | pattern data |
| 135: | target condition |
| 136: | measurement data |
| 137: | control mode list |
| 138: | variable importance level table |
| 139: | comfort level table |
| 140: | comfort level function |
| 141: | model creation circuitry |
| 142: | airflow analysis circuitry |

143: pattern generation circuitry
144: airflow control circuitry
145: function improvement circuitry

**Claims**

1. An air-conditioning control device comprising:

   a variable importance level table that stores importance levels of variables showing environment of an air-conditioning target space for each control mode;
   a comfort level table that stores comfort levels of the variables for the individual importance levels;
   factor calculation circuitry configured to calculate weighting factors of the variables from comfort level functions that define relationships between values of the variables and the comfort levels, and the comfort levels that are associated with the importance levels of the variables associated with the control mode and are identified from the variable importance level table and the comfort level table;
   evaluation value calculation circuitry configured to calculate evaluation values from the calculated weighting factors and the variables associated with manipulation amounts; and
   operation state determination circuitry configured to determine the manipulation amount in which the evaluation value is high as a manipulation amount of an air-conditioning apparatus.

2. The air-conditioning control device of claim 1,
   wherein the factor calculation circuitry is configured to calculate the weighting factors of the variables from sizes of areas in which values each equal to or larger than a corresponding one of the comfort levels identified from the importance levels are satisfied in the comfort level functions.

3. The air-conditioning control device of claim 2,
   wherein the factor calculation circuitry is configured to calculate the weighting factors of the variables such that the weighting factors increase as the sizes of the areas decrease.

4. The air-conditioning control device of any one of claims 1 to 3,
   wherein the evaluation value calculation circuitry is configured to calculate the evaluation value by multiplying and adding the variable and the weighting factor associated with the variable together.

5. The air-conditioning control device of any one of claims 1 to 4,

   further comprising pattern data showing a tendency of distribution of the environment of the air-conditioning target space from results of airflow analysis with less data than the results of the airflow analysis,
   wherein the variables include a variable identified from the pattern data.

6. The air-conditioning control device of any one of claims 1 to 5,

   wherein the pattern data includes an air quality-related variable,
   wherein the manipulation amounts include a manipulation amount of a ventilation device, and
   wherein air quality determination circuitry is provided, the air quality determination circuitry being configured to determine whether the air quality-related variable identified from the pattern data satisfies a target value, and extract the pattern data in which the air quality-related variable falls within a permissible range as a candidate pattern for calculation of the evaluation values.

7. The air-conditioning control device of any one of claims 1 to 6,
   further comprising:

   a change history table that stores a history of changes in set values; and
   function improvement configured to, from a representative set value calculated from the set values within a constant period in the change history table and a current set value, correct the comfort level of the comfort level function by a predetermined amount with the current set value serving as a reference.

8. The air-conditioning control device of claim 7,
   wherein the function improvement circuitry is configured to correct the comfort level function when the representative set value exhibits higher comfort as a result of comparison between the representative set value and the current set value.

9. An air-conditioning control method comprising:

storing importance levels of variables showing environment of an air-conditioning target space in a variable importance level table for each control mode;
storing comfort levels of the variables in a comfort level table for the individual importance levels;
calculating weighting factors of the variables from comfort level functions that define relationships between values of the variables and the comfort levels, and the comfort levels that are associated with the importance levels of the variables associated with the control mode and are identified from the variable importance level table and the comfort level table;
calculating evaluation values from the calculated weighting factors and the variables associated with manipulation amounts; and
operation state determination circuitry configured to determine the manipulation amount in which the evaluation value is high as a manipulation amount of an air-conditioning apparatus.

FIG. 1

FIG. 2

FIG. 3

AIR-CONDITIONING CONTROL DEVICE ~1

STORAGE DEVICE
(SUCH AS MEMORY) ~13

ANALYSIS CONDITION LIST ~131

DEVICE AND SPACE
INFORMATION ~132

AIRFLOW ANALYSIS MODEL ~133

PATTERN DATA ~134

CONTROL MODE LIST ~137

VARIABLE IMPORTANCE
LEVEL TABLE ~138

COMFORT LEVEL TABLE ~139

COMFORT LEVEL FUNCTION ~140

TARGET CONDITION ~135

MEASUREMENT DATA ~136

AIR-CONDITIONING
OPERATION DATA ~36

SENSOR DATA ~37

ARITHMETIC DEVICE
(PROCESSOR) ~14

MODEL CREATION
CIRCUITRY ~141

AIRFLOW ANALYSIS
CIRCUITRY ~142

PATTERN GENERATION
CIRCUITRY ~143

AIRFLOW CONTROL CIRCUITRY ~144

AIRFLOW CONTROL PERFOR-
MABILITY DETERMINATION
CIRCUITRY ~41

OPERATION STATE DETER-
MINATION CIRCUITRY ~42

FACTOR CALCULATION
CIRCUITRY ~44

CONTROL COMMAND
CONVERSION CIRCUITRY ~43

RECEPTION
DEVICE ~11

TRANSMISSION
DEVICE ~12

SENSORS ~3

AIR CONDI-
TIONER ~2

FIG. 4

| ANALYSIS CON-DITION No. | PATTERN NAME | OPERATION MODE | PRIORITY LEVEL | LOAD CONDITION | OUTLET CONDITION | PATTERN GENERATION STATUS |
|---|---|---|---|---|---|---|
| 1 | PATTERN 001 | HEATING | 2 | H1 | U1 | NOT COMPLETED |
| 2 | PATTERN 002 | HEATING | 2 | H1 | U2 | NOT COMPLETED |
| 3 | PATTERN 003 | HEATING | 1 | H1 | U3 | COMPLETED |
| 4 | PATTERN 004 | HEATING | 2 | H1 | U4 | NOT COMPLETED |
| 5 | PATTERN 005 | HEATING | 2 | H2 | U1 | NOT COMPLETED |
| 6 | PATTERN 006 | HEATING | 1 | H2 | U2 | COMPLETED |
| ... | | | | | | |

FIG. 5

| OUTLET CONDITION | ON-OFF STATE | OUTLET AIRFLOW SPEED | VERTICAL AIRFLOW DIRECTION | HORIZONTAL AIRFLOW DIRECTION |
|---|---|---|---|---|
| U1 | ON | 6 | 30 | -45 |
| U2 | 1 | 6 | 40 | -22.5 |
| U3 | 1 | 6 | 50 | 0 |
| U4 | 1 | 6 | 60 | 22.5 |
| ... | | | | |

FIG. 6

| LOAD CONDITION | WALL TEMPERATURE | CEILING TEMPERATURE | FLOOR TEMPERATURE |
|---|---|---|---|
| H1 | 15 | 25 | 15 |
| H2 | 15 | 25 | 15 |
| H3 | 15 | 25 | 15 |
| H4 | 15 | 25 | 15 |
| ... | | | |

FIG. 7

| CONDITION SETTING | UPPER LIMIT PRIORITY LEVEL | LOWER LIMIT PRIORITY LEVEL |
|---|---|---|
| ESSENTIAL CONDITION | 1 | 3 |
| ADDITIONAL CONDITION | 4 | 10 |

FIG. 8

| TEMPERATURE SECTION | PATTERN 001 OCCURRENCE PERCENTAGE [%] | PATTERN 002 OCCURRENCE PERCENTAGE [%] | PATTERN 003 OCCURRENCE PERCENTAGE [%] | ... |
|---|---|---|---|---|
| 20 TO 21 | 1.53 | 0.22 | 18.17 | |
| 21 TO 22 | 1.48 | 2.38 | 18.76 | |
| 22 TO 23 | 2.70 | 2.70 | 19.29 | |
| 23 TO 24 | 5.93 | 2.52 | 19.76 | |
| 24 TO 25 | 44.43 | 5.26 | 20.38 | |
| 25 TO 26 | 29.25 | 20.22 | 20.80 | |
| 26 TO 27 | 9.70 | 40.16 | 21.20 | |
| 27 TO 28 | 2.02 | 12.13 | 21.71 | |
| 28 TO 29 | 0.13 | 4.85 | 22.26 | |
| 29 TO 30 | 0.00 | 4.45 | 22.69 | |

FIG. 9

| CONTROL MODE SYMBOL | OPERATION MODE | CONTROL MODE LIST |
|---|---|---|
| A | COOLING | RAPID COOLING |
| B | HEATING | RAPID HEATING |
| C | COOLING | ROOM TEMPERATURE KEEPING (COOLING) |
| D | HEATING | ROOM TEMPERATURE KEEPING (HEATING) |
| E | COOLING | INTELLECTUAL PRODUCTIVITY IMPROVEMENT (COOLING) |
| ... | ... | ... |

## FIG. 10

| CONTROL MODE SYMBOL | OPERATION MODE | VARIABLE | | |
|---|---|---|---|---|
| | | AIRFLOW SPEED AT +1.1 m ABOVE FLOOR | TEMPERATURE AT +1.1 m ABOVE FLOOR | DIFFERENCE BETWEEN TEMPERATURES AT +1.7 m ABOVE FLOOR AND +0.1 m ABOVE FLOOR |
| A | COOLING | 2 | 1 | 3 |
| B | HEATING | 2 | 3 | 1 |
| C | COOLING | 2 | 1 | 3 |
| D | HEATING | 1 | 2 | 1 |
| E | COOLING | 1 | 1 | 2 |
| ... | ... | ... | ... | ... |

## FIG. 11

| CONTROL MODE SYMBOL | OPE-RATION MODE | VARIABLE | | | | | | | |
|---|---|---|---|---|---|---|---|---|---|
| | | AIRFLOW SPEED AT +1.1 m ABOVE FLOOR (1) | TEMPERATURE AT +1.7 m ABOVE FLOOR (2) | TEMPERATURE AT +1.1 m ABOVE FLOOR (3) | TEMPERATURE AT 0.1 m ABOVE FLOOR (4) | VERTICAL TEMPERATURE DIFFERENCE ((2) − (4)) | SENSORY TEMPERATURE (5) | PMV (6) | ... |
| A | COOLING | 1 | 3 | 2 | 3 | 4 | 1 | 2 | ... |
| B | HEATING | 2 | 4 | 3 | 1 | 1 | 3 | 2 | ... |
| C | COOLING | 2 | 5 | 1 | 5 | 5 | 1 | 1 | ... |
| D | HEATING | 1 | 3 | 2 | 1 | 1 | 1 | 1 | ... |
| E | COOLING | 1 | 4 | 1 | 3 | 2 | 2 | 1 | ... |
| ... | ... | ... | ... | ... | ... | ... | ... | ... | ... |

## FIG. 12

| IMPORTANCE LEVEL | VARIABLE (DURING COOLING) | | |
|---|---|---|---|
| | AIRFLOW SPEED AT +1.1 m ABOVE FLOOR | TEMPERATURE AT +1.1 m ABOVE FLOOR | DIFFERENCE BETWEEN TEMPERATURES AT +1.7 m ABOVE FLOOR AND +0.1 m ABOVE FLOOR |
| 1 | 90% | 85% | 85% |
| 2 | 75% | 65% | 55% |
| 3 | 50% | 55% | 30% |
| ... | ... | ... | ... |

## FIG. 13

| IMPORTANCE LEVEL | VARIABLE (DURING HEATING) | | |
|---|---|---|---|
| | AIRFLOW SPEED AT +1.1 m ABOVE FLOOR | TEMPERATURE AT +1.1 m ABOVE FLOOR | DIFFERENCE BETWEEN TEMPERATURES AT +1.7 m ABOVE FLOOR AND +0.1 m ABOVE FLOOR |
| 1 | 95% | 85% | 90% |
| 2 | 80% | 60% | 70% |
| 3 | 55% | 30% | 60% |
| ... | ... | ... | ... |

FIG. 14

| IMPOR-TANCE LEVEL | COMFORT LEVEL ASSOCIATED WITH IMPORTANCE LEVEL FOR EACH VARIABLE (DURING COOLING) | | | | | | | |
|---|---|---|---|---|---|---|---|---|
| | AIRFLOW SPEED AT +1.1 m ABOVE FLOOR (1) | TEMPER-ATURE AT +1.7 m ABOVE FLOOR (2) | TEMPER-ATURE AT +1.1 m ABOVE FLOOR (3) | TEMPER-ATURE AT 0.1 m ABOVE FLOOR (4) | VERTICAL TEMPER-ATURE DIFFER-ENCE ((2) − (4)) | SENSORY TEMPER-ATURE (5) | PMV (6) | · · · |
| 1 | 90% | 80% | 90% | 70% | 90% | 80% | 90% | · · · |
| 2 | 75% | 70% | 80% | 55% | 70% | 75% | 85% | · · · |
| 3 | 50% | 60% | 50% | 40% | 50% | 70% | 75% | · · · |
| 4 | 35% | 50% | 40% | 25% | 30% | 65% | 60% | · · · |
| 5 | 10% | 40% | 20% | 10% | 10% | 60% | 40% | · · · |
| · · · | · · · | · · · | · · · | · · · | · · · | · · · | · · · | · · · |

FIG. 15

FIG. 16

COMFORT LEVEL [%]

90

0

26

TEMPERATURE AT +1.1 m
ABOVE FLOOR
(DURING COOLING) [° C]

FIG. 17

COMFORT LEVEL [%]

100

0

8

VERTICAL TEMPERATURE
DIFFERENCE [° C]
(TEMPERATURE AT +1.7 m ABOVE FLOOR −
TEMPERATURE AT +1.1 m ABOVE FLOOR,
DURING COOLING)

## FIG. 18

| CONTROL MODE SYMBOL | VARIABLE | | |
|---|---|---|---|
| | AIRFLOW SPEED AT +1.1 m ABOVE FLOOR | TEMPERATURE AT +1.1 m ABOVE FLOOR | DIFFERENCE BETWEEN TEMPERATURES AT +1.7 m ABOVE FLOOR AND +0.1 m ABOVE FLOOR |
| ... | ... | ... | ... |
| C | 2 | 1 | 3 |
| ... | ... | ... | ... |

## FIG. 19

| IMPORTANCE LEVEL | VARIABLE (DURING COOLING) | | |
|---|---|---|---|
| | AIRFLOW SPEED AT +1.1 m ABOVE FLOOR | TEMPERATURE AT +1.1 m ABOVE FLOOR | DIFFERENCE BETWEEN TEMPERATURES AT +1.7 m ABOVE FLOOR AND +0.1 m ABOVE FLOOR |
| 1 | ... | 85% | ... |
| 2 | 75% | ... | ... |
| 3 | ... | ... | 30% |
| ... | ... | ... | ... |

## FIG. 20

FIG. 21

COMFORT LEVEL [%]

IMPORTANCE
LEVEL: 1
(COMFORT
LEVEL: 85%)

COMFORT LEVEL FUNCTION g(x)

Rt = 0.2

0

($=t_{min}$)

25.5
($=t_1$)

26.5
($=t_2$)

$t_{max}$

TEMPERATURE AT
+1.1 m ABOVE FLOOR
(DURING COOLING)
[°C]

FIG. 22

COMFORT LEVEL [%]

COMFORT LEVEL FUNCTION h(x)

Ru = 0.9

IMPORTANCE
LEVEL: 3
(COMFORT
LEVEL: 30%)

0

($=u_{min}=u_1$)

10

($=u_2$)

$u_{max}$

DIFFERENCE BETWEEN
TEMPERATURES AT +1.7 m ABOVE
FLOOR AND +1.1 m ABOVE
FLOOR [°C] (DURING COOLING)

FIG. 23

COMFORT LEVEL [%]

c

0

b

TEMPERATURE
AT +1.1 m
ABOVE FLOOR
(DURING COOLING)
[° C]

a

AIRFLOW SPEED
AT +1.1 m
ABOVE FLOOR
(DURING COOLING) [m/s]

FIG. 24

PROCESSING
CIRCUIT
81

FIG. 25

82
PROCESSOR
MEMORY
83
84

# FIG. 26

```
                    ┌──────────┐
                    │  START   │
                    └────┬─────┘
                         │   ┌─────────────────────┐
                         ▼   │                     │
                    ◇ ST11                         │
              CAN AIRFLOW                          │
              CONTROL BE ──────────────────────────┘
              PERFORMED?            NO
                    │
                   YES
                    │               ┌──────────────┐
                    ▼               │              │
                ◇ ST12                             │
          HAS AIRFLOW                              │
          CONTROL PERFORMING ──────────────────────┤
          PERIOD COME?        NO                    │
                    │                               │
                   YES                              │
                    ▼  ST13                         │
          ┌──────────────────┐                      │
          │ ACQUIRE          │                      │
          │ MEASUREMENT DATA │                      │
          └────────┬─────────┘                      │
                   ▼  ST14                           │
          ┌──────────────────┐                      │
          │ SELECT PATTERN   │                      │
          └────────┬─────────┘                      │
                   ▼  ST15                           │
          ┌──────────────────┐                      │
          │ DETERMINE AIR-   │                      │
          │ CONDITIONING     │                      │
          │ OPERATION STATE  │                      │
          └────────┬─────────┘                      │
                   ▼  ST16                           │
          ┌──────────────────┐                      │
          │ TRANSMIT CONTROL │                      │
          │ COMMAND          │                      │
          └────────┬─────────┘                      │
                   ▼  ST17                           │
                ◇ END CONDITION? ───────────────────┘
                   │              NO
                  YES
                   ▼
              ┌─────────┐
              │   END   │
              └─────────┘
```

FIG. 27

```
        ┌─────────┐
        │  START  │
        └────┬────┘
             │
             ▼
   ┌──────────────────┐   ST31
   │      k = 1       │
   └────────┬─────────┘
             │                                    ◄─────────────────┐
             ▼                                                      │
   ┌──────────────────┐   ST32                                      │
   │ PERFORM AIRFLOW  │                                             │
   │     ANALYSIS     │                                             │
   └────────┬─────────┘                                             │
             │                                                      │
             ▼                                                      │
   ┌──────────────────┐   ST33                                      │
   │ GENERATE PATTERN │                                             │
   │DATA FROM ANALYSIS│                                             │
   │      RESULT      │                                             │
   └────────┬─────────┘                                             │
             │                                                      │
             ▼                                                      │
   ┌──────────────────┐   ST34                                      │
   │ STORE PATTERN    │                                             │
   │ DATA IN STORAGE  │                                             │
   │     DEVICE       │                                             │
   └────────┬─────────┘                                             │
             │                                                      │
             ▼          ST35                                        │
          ◇─────────────◇        NO                                 │
         ◇   k = kL ?    ◇─────────────┐                            │
          ◇─────────────◇               │                          │
             │                          ▼            ST36           │
             │ YES             ┌──────────────────┐                 │
             ▼                 │    k = k + 1     │                 │
   ┌──────────────────┐ ST37   └────────┬─────────┘─────────────────┘
   │DETERMINE THAT    │
   │AIRFLOW CONTROL   │
   │CAN BE STARTED    │
   └────────┬─────────┘
             │
             ▼
        ┌─────────┐
        │   END   │
        └─────────┘
```

## FIG. 28

```
            START
              │
              │        ST21
 ┌────────────────────────┐
 │   SELECT CURRENT       │
 │   STATE PATTERN        │
 └────────────────────────┘
              │
              │        ST22
 ┌────────────────────────┐
 │   EXTRACT CANDIDATE    │
 │   PATTERNS             │
 └────────────────────────┘
              │
              │        ST23
 ┌────────────────────────┐
 │   CALCULATE EVALUATION │
 │   VALUES               │
 └────────────────────────┘
              │
              │        ST24
 ┌────────────────────────┐
 │   DETERMINE OPERATION  │
 │   STATE                │
 └────────────────────────┘
              │
            END
```

## FIG. 29

```
            START
              │
              │        ST41
 ┌────────────────────────┐
 │   SELECT CONTROL MODE  │
 └────────────────────────┘
              │
              │        ST42
 ┌────────────────────────┐
 │   ACQUIRE VARIABLE     │
 │   IMPORTANCE LEVEL     │
 └────────────────────────┘
              │
              │        ST43
 ┌────────────────────────┐
 │   ACQUIRE COMFORT LEVEL│
 │   ASSOCIATED WITH      │
 │   IMPORTANCE LEVEL OF  │
 │   EACH VARIABLE        │
 └────────────────────────┘
              │
              │        ST44
 ┌────────────────────────┐
 │ CALCULATE AREA VALUE OF│
 │ REGION IN WHICH COMFORT│
 │ LEVEL OR MORE IS       │
 │ SATISFIED              │
 └────────────────────────┘
              │
              │        ST45
 ┌────────────────────────┐
 │  DETERMINE WEIGHTING   │
 │  FACTORS OF VARIABLES  │
 │  FROM RATIO OF AREA    │
 │  VALUES                │
 └────────────────────────┘
              │
            END
```

## FIG. 30

## FIG. 31

FIG. 32

## FIG. 33

## FIG. 34

| OUTLET CONDITION | INDOOR UNIT | | | | VENTILATION DEVICE |
|---|---|---|---|---|---|
| | ON-OFF STATE | OUTLET AIR-FLOW SPEED | VERTICAL AIRFLOW DIRECTION | HORIZONTAL AIRFLOW DIRECTION | VENTILATION AIRFLOW VOLUME |
| U1 | ON | 6 | 30 | −45 | LOW |
| U2 | 1 | 6 | 40 | −22.5 | LOW |
| U3 | 1 | 6 | 50 | 0 | LOW |
| U4 | 1 | 6 | 60 | 22.5 | LOW |
| ... | ... | ... | ... | ... | ... |

## FIG. 35

| $CO_2$ CONCENTRATION SECTION | PATTERN 001 OCCURRENCE PERCENTAGE [%] | PATTERN 002 OCCURRENCE PERCENTAGE [%] | PATTERN 003 OCCURRENCE PERCENTAGE [%] | ・・・ |
|---|---|---|---|---|
| 450 OR LOWER | 17.59 | 17.08 | 16.54 | ・・・ |
| 450 TO 500 | 18.43 | 17.56 | 19.08 | ・・・ |
| 500 TO 550 | 19.04 | 18.57 | 21.57 | ・・・ |
| 550 TO 600 | 15.24 | 14.74 | 15.4 | ・・・ |
| 600 TO 650 | 13.13 | 9.72 | 10.37 | ・・・ |
| 650 TO 700 | 7.99 | 8.24 | 6.15 | ・・・ |
| 700 TO 750 | 5.13 | 5.36 | 4.52 | ・・・ |
| 750 TO 800 | 3.44 | 4.98 | 4.24 | ・・・ |
| 800 TO 850 | 0 | 2.49 | 2.12 | ・・・ |
| 850 TO 900 | 0 | 1.25 | 0 | ・・・ |
| 900 TO 950 | 0 | 0 | 0 | ・・・ |
| 950 TO 1000 | 0 | 0 | 0 | ・・・ |
| 1000 OR HIGHER | 0 | 0 | 0 | ・・・ |

## FIG. 36

COMFORT LEVEL [%]

100

0    400                    1200    $CO_2$ CONCENTRATION AT 1.1 m ABOVE FLOOR [ppm]

FIG. 37

START

~ST51

SELECT CURRENT
STATE PATTERN

~ST52

EXTRACT CANDIDATE
PATTERNS

~ST53

EXTRACT PATTERN IN WHICH
AIR QUALITY TARGET
CONDITION IS SATISFIED

~ST54

CALCULATE
EVALUATION VALUES

~ST55

DETERMINE
OPERATION STATES

END

FIG. 38

## FIG. 39

| DATE AND TIME OF CHANGE | INDOOR UNIT | | | | VENTILATION DEVICE |
|---|---|---|---|---|---|
| | SET TEM-PERATURE | AIRFLOW VOLUME | VERTICAL AIRFLOW DIRECTION | LATERAL AIRFLOW DIRECTION | VENTILATION AIRFLOW VOLUME |
| (CURRENT SET VALUE) | (25.0℃) | (MEDIUM) | (50°) | (22.5°) | (MEDIUM) |
| 2021/1/10 10:30:10 | 26.5℃ | LOW | (50°) | −45° | (MEDIUM) |
| 2021/1/10 10:31:35 | 25.5℃ | (MEDIUM) | 40° | (22.5°) | (MEDIUM) |
| 2021/1/10 10:33:50 | (25.0℃) | (MEDIUM) | (50°) | (22.5°) | HIGH |
| 2021/1/10 10:34:25 | 24.5℃ | HIGH | 60° | 0° | (MEDIUM) |
| 2021/1/10 10:34:55 | 26.0℃ | (MEDIUM) | 30° | (22.5°) | LOW |
| … | … | … | … | … | … |

## FIG. 40

COMFORT LEVEL [%]

90

−5%

0

24.5    26

TEMPERATURE AT +1.1 m ABOVE FLOOR (DURING COOLING) [℃]

FIG. 41

```
        START

          ↓              ⌇ST61
  CALCULATE AVERAGE
  VALUES OF CHANGED
     SET VALUES

          ↓              ⌇ST62
  CALCULATE AVERAGE
   VALUES OF LATEST
     SET VALUES

          ↓              ⌇ST63
      CALCULATE
REPRESENTATIVE VALUES OF
VARIABLES IN PATTERN DATA

          ↓              ⌇ST64
  IMPROVE COMFORT
   LEVEL FUNCTIONS

          ↓              ⌇ST65
   UPDATE COMFORT
   LEVEL FUNCTIONS

          ↓
         END
```

## INTERNATIONAL SEARCH REPORT

| International application No. |
| --- |
| **PCT/JP2022/015944** |

### A. CLASSIFICATION OF SUBJECT MATTER

*F24F 11/64*(2018.01)i
FI:   F24F11/64

According to International Patent Classification (IPC) or to both national classification and IPC

### B. FIELDS SEARCHED

Minimum documentation searched (classification system followed by classification symbols)

F24F11/64

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 7042973 B1 (MITSUBISHI ELECTRIC CORP.) 28 March 2022 (2022-03-28) paragraphs [0010]-[0102], fig. 1-13 | 1-9 |
| A | JP 6739671 B1 (MITSUBISHI ELECTRIC CORP.) 12 August 2020 (2020-08-12) entire text, all drawings | 1-9 |
| A | JP 2021-152416 A (MITSUBISHI ELECTRIC CORP.) 30 September 2021 (2021-09-30) entire text, all drawings | 1-9 |
| A | JP 2014-16126 A (PANASONIC CORP.) 30 January 2014 (2014-01-30) entire text, all drawings | 1-9 |
| A | CN 108200668 A (GREE ELECTRIC APPLIANCES, INC. OF ZHUHAI) 22 June 2018 (2018-06-22) paragraph [0089], fig. 5 | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 June 2022** | **14 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/015944**

| Patent document cited in search report | | | Publication date (day/month/year) | Patent family member(s) | | | Publication date (day/month/year) |
|---|---|---|---|---|---|---|---|
| JP | 7042973 | B1 | 28 March 2022 | WO | 2022/085100 | A1 | |
| | | | | paragraphs [0010]-[0102], fig. 1-13 | | | |
| JP | 6739671 | B1 | 12 August 2020 | WO | 2021/033231 | A1 | |
| | | | | entire text, all drawings | | | |
| JP | 2021-152416 | A | 30 September 2021 | WO | 2019/235109 | A1 | |
| | | | | entire text, all drawings | | | |
| JP | 2014-16126 | A | 30 January 2014 | WO | 2014/010186 | A1 | |
| | | | | entire text, all drawings | | | |
| CN | 108200668 | A | 22 June 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016061447 A